(19) Europäisches Patentamt
European Patent Office
Office européen des brevets

(11) **EP 4 560 963 A1**

(12) **EUROPEAN PATENT APPLICATION**
published in accordance with Art. 153(4) EPC

(43) Date of publication:
**28.05.2025 Bulletin 2025/22**

(21) Application number: **23851546.4**

(22) Date of filing: **18.07.2023**

(51) International Patent Classification (IPC):
**H04L 5/00** (2006.01)

(52) Cooperative Patent Classification (CPC):
**H04L 5/00**

(86) International application number:
**PCT/CN2023/107867**

(87) International publication number:
**WO 2024/032323 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.08.2022 CN 202210952282**

(71) Applicant: **Huawei Technologies Co., Ltd.
Shenzhen, Guangdong 518129 (CN)**

(72) Inventors:
• **YI, Feng
Shenzhen, Guangdong 518129 (CN)**
• **SU, Hongjia
Shenzhen, Guangdong 518129 (CN)**
• **LU, Lei
Shenzhen, Guangdong 518129 (CN)**
• **QI, Hong
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **COMMUNICATION METHOD AND COMMUNICATION APPARATUS**

(57) A communication method and a communication apparatus are provided. The method may include: A first terminal apparatus accesses a first channel. The first terminal apparatus receives first sidelink data on a first resource. The first terminal apparatus sends first sidelink feedback information on a second resource. The first sidelink feedback information indicates a receiving status of the first sidelink data, the second resource is a resource corresponding to the first resource, and the first resource and the second resource belong to the first channel. In this application, a sidelink data resource and a corresponding sidelink feedback information resource are on a same channel. **In** this case, the sidelink data resource and the corresponding sidelink feedback information resource are bundled, that is, the sidelink data resource and the corresponding sidelink feedback information resource are enabled to be on a same channel, thereby improving a probability that a terminal apparatus successfully feeds back sidelink feedback information.

Method 1200

A first terminal apparatus accesses a first channel — 1201

The first terminal apparatus receives first sidelink data on a first resource — 1210

The first terminal apparatus sends first sidelink feedback information on a second resource, where the first sidelink feedback information indicates a receiving status of the first sidelink data, the second resource is a resource corresponding to the first resource, and the first resource and the second resource belong to the first channel — 1220

FIG. 12

## Description

This application claims priority to Chinese Patent Application No. 202210952282.X, filed with the China National Intellectual Property Administration on August 9, 2022 and entitled "COMMUNICATION METHOD AND COMMUNICATION APPARATUS", which is incorporated herein by reference in its entirety.

## TECHNICAL FIELD

Embodiments of this application relate to the communication field, and more specifically, to a communication method and a communication apparatus.

## BACKGROUND

In a wireless communication system, spectrum resources may be classified into a licensed spectrum and an unlicensed spectrum. In an unlicensed spectrum, a terminal may use a spectrum resource through contention. In a possible manner, the terminal contends for a channel through listen-before-talk (listen-before-talk, LBT), to use a channel resource. If the LBT of the terminal succeeds, the terminal may send data by using the channel resource; or if the LBT of the terminal fails, the terminal cannot use the channel resource and cannot send data. Currently, in sidelink (sidelink, SL) communication, enabling an unlicensed spectrum is an important evolution direction.

During data transmission, a terminal sends data to another terminal, and the another terminal may send feedback information of the data to the terminal based on a receiving status of the data. In SL unlicensed spectrum communication, how to perform sidelink feedback is a problem worth considering.

## SUMMARY

This application provides a communication method and a communication apparatus, to provide a sidelink feedback solution in SL communication, and improve, as much as possible, a probability that a terminal apparatus successfully feeds back sidelink feedback information.

According to a first aspect, a communication method is provided. The method may be performed by a terminal device, or may be performed by a component (such as a chip or a circuit) of the terminal device. This is not limited in this application. For ease of description, an example in which the method is performed by a first terminal apparatus is used below for description.

The method may include: The first terminal apparatus accesses a first channel. The first terminal apparatus receives first sidelink data on a first resource. The first terminal apparatus sends first sidelink feedback information on a second resource. The first sidelink feedback information indicates a receiving status of the first sidelink data, the second resource is a resource corresponding to the first resource, and the first resource and the second resource belong to the first channel.

Based on the foregoing technical solution, a channel on which the first terminal apparatus receives sidelink data and a channel on which the first terminal apparatus sends sidelink feedback information corresponding to the sidelink data are the same, that is, a sidelink data resource and a corresponding sidelink feedback information resource are on a same channel. In this case, a sidelink feedback can be implemented, and the sidelink data resource and the corresponding sidelink feedback information resource are bundled, that is, the sidelink data resource and the corresponding sidelink feedback information resource are enabled to be on a same channel, thereby improving a probability of successfully feeding back sidelink feedback information. For example, a second terminal apparatus sends sidelink data to the first terminal apparatus in a COT of a channel #1. When there is COT sharing, for example, the second terminal apparatus and the first terminal apparatus share a COT resource of the channel #1, the first terminal apparatus can effectively use a current COT sharing opportunity to send sidelink feedback information, that is, send the sidelink feedback information in the COT of the channel #1, so that an LBT operation does not need to be performed on another channel, avoiding a case in which the sidelink feedback information cannot be sent in time because LBT fails to be performed on the another channel.

With reference to the first aspect, in some implementations of the first aspect, the method further includes: The first terminal apparatus obtains configuration information of a resource pool. The resource pool includes at least two channels, the at least two channels include the first channel, the configuration information of the resource pool indicates that a quantity of resource elements that are used to send sidelink feedback information on each of the at least two channels is M, and M is an integer greater than 1.

Based on the foregoing technical solution, because quantities of resource blocks that are used to send sidelink feedback information on different channels are the same, it can be ensured as much as possible that a sidelink data resource and a corresponding sidelink feedback information resource are on a same channel.

With reference to the first aspect, in some implementations of the first aspect, the method further includes: The first terminal apparatus determines the second resource based on the configuration information of the resource pool.

With reference to the first aspect, in some implementations of the first aspect, the first terminal apparatus obtains the configuration information of the resource pool. The resource pool includes the first channel and a second channel, a resource element that is used to send sidelink feedback information on the first channel is used to feed back sidelink data on the first channel, and a resource block that is used to send sidelink feedback information on the second channel is used to feed back sidelink data on the second channel.

Based on the foregoing technical solution, mapping between a sidelink data resource and a sidelink feedback information resource may be performed on an LBT channel or at a resource block set granularity. In this way, the sidelink data resource and the corresponding sidelink feedback information resource can be on a same channel.

With reference to the first aspect, in some implementations of the first aspect, the resource elements that are used to send sidelink feedback information on each of the at least two channels have a same location.

Based on the foregoing technical solution, a quantity of frequency domain elements that are used to transmit sidelink feedback information on different channels in the resource pool can be the same, so that a sidelink data resource and a corresponding sidelink feedback information resource are on a same channel. In addition, a bitmap on another channel may be considered as a copy of a bitmap on a specific channel.

With reference to the first aspect, in some implementations of the first aspect, the configuration information is a bitmap, and the bitmap has a same quantity of bits with a value of 1 on each of the at least two channels.

According to a second aspect, a communication method is provided. The method may be performed by a terminal device, or may be performed by a component (such as a chip or a circuit) of the terminal device. This is not limited in this application. For ease of description, an example in which the method is performed by a first terminal apparatus is used below for description.

The method may include: The first terminal apparatus receives first sidelink data on a first resource. The first terminal apparatus sends first sidelink feedback information on a first resource element. The first sidelink feedback information indicates a receiving status of the first sidelink data, the first resource element belongs to a second resource, the second resource is a resource corresponding to the first resource, and the second resource includes at least two resource elements.

Based on the foregoing technical solution, a plurality of sidelink feedback information resources are introduced. To be specific, one sidelink data resource may correspond to a plurality of sidelink feedback information resources, and the plurality of sidelink feedback information resources may also be referred to as candidate sidelink feedback information resources. In this way, a sidelink feedback can be implemented, and an opportunity of successfully transmitting sidelink feedback information can be increased. For example, if one piece of sidelink data corresponds to one sidelink feedback information resource, the terminal apparatus cannot transmit sidelink feedback information after failing to perform LBT on a channel on which the sidelink feedback information resource is located. On the contrary, if one piece of sidelink data corresponds to a plurality of sidelink feedback information resources, the terminal apparatus may perform LBT at a plurality of locations. In other words, the terminal apparatus may perform LBT on a channel on which each of the plurality of sidelink feedback information resources is located. The terminal apparatus can send sidelink feedback information provided that LBT is successfully performed on a channel on which any one of the plurality of sidelink feedback information resources is located, thereby increasing an opportunity of successfully transmitting the sidelink feedback information.

With reference to the second aspect, in some implementations of the second aspect, the at least two resource elements are located at different time domain locations and/or different frequency domain locations.

With reference to the second aspect, in some implementations of the second aspect, an index of the second resource satisfies:

$$\left(P_{ID} + M_{ID} + \Delta 1\right) \bmod \left( floor \left( \frac{R_{PRB,CS}^{PSFCH}}{L} \right) \right) + \Delta 2.$$

Herein, $P_{ID}$ represents a physical layer source address identifier ID carried in control information, $M_{ID}$ represents an ID indicated by a higher layer for the first sidelink data of the first terminal apparatus during multicast transmission, $R_{PRB,CS}^{PSFCH}$ represents a quantity of resource elements that correspond to the first sidelink data and that are used to send the first sidelink feedback information in a resource block set or in a resource pool, $\Delta 1$ and $\Delta 2$ represents resource element index offsets, the resource element index offsets are related to a resource mapping location of the first sidelink feedback information, $\Delta 1$ and $\Delta 2$ are integers greater than or equal to 0, and L is a positive integer.

Optionally, L=1, or L=Q, or L=G, or L=Q×G. Herein, Q represents a quantity of resource elements that are in same time domain and that are in different resource block sets in the at least two resource elements, and G represents a quantity of resource elements that are in a same resource block set and that are in different time domain in the at least two resource elements.

Optionally, the formula

$$\left(P_{ID} + M_{ID} + \Delta 1\right) \bmod \left( floor\left( \frac{R_{PRB,CS}^{PSFCH}}{L} \right) \right) + \Delta 2$$

may also be changed to:

$$\left(P_{ID} + M_{ID} + \Delta 1\right) \bmod \left( \frac{R_{PRB,CS}^{PSFCH}}{L} \right) + \Delta 2,$$

that is, floor(A/B) and (A/B) have a same meaning or value. Herein, the floor() function represents rounding down. It may be understood that the floor() function herein may also be replaced with another rounding function.

With reference to the second aspect, in some implementations of the second aspect, the method further includes: The first terminal apparatus determines the first sidelink feedback information based on the first resource.

With reference to the second aspect, in some implementations of the second aspect, the first resource element satisfies at least one of the following conditions: the first resource element belongs to a resource in a channel occupancy time COT of the first terminal apparatus; a resource block set corresponding to the first resource element is a resource block set to which the first resource belongs; a resource block set corresponding to the first resource element is a resource block set corresponding to sidelink data sent by the first terminal apparatus; or a resource index of the first resource element is a preset index.

With reference to the second aspect, in some implementations of the second aspect, the second resource further includes at least one interlaced resource block in frequency domain.

According to a third aspect, a communication method is provided. The method may be performed by a terminal device, or may be performed by a component (such as a chip or a circuit) of the terminal device. This is not limited in this application. For ease of description, an example in which the method is performed by a second terminal apparatus is used below for description.

The method may include: The second terminal apparatus sends first sidelink data on a first resource. The second terminal apparatus receives first sidelink feedback information on a second resource. The first sidelink feedback information indicates a receiving status of the first sidelink data, the second resource is a resource corresponding to the first resource, and the first resource and the second resource belong to a first channel.

With reference to the third aspect, in some implementations of the third aspect, the method further includes: The second terminal apparatus obtains configuration information of a resource pool. The resource pool includes at least two channels, the at least two channels include the first channel, the configuration information of the resource pool indicates that a quantity of resource elements that are used to send sidelink feedback information on each of the at least two channels is M, and M is an integer greater than 1.

With reference to the third aspect, in some implementations of the third aspect, the resource elements that are used to send sidelink feedback information on each of the at least two channels have a same location.

With reference to the third aspect, in some implementations of the third aspect, the configuration information is a bitmap, and the bitmap has a same quantity of bits with a value of 1 on each of the at least two channels.

For beneficial effects of the third aspect and the possible designs, refer to related descriptions of the first aspect. Details are not described herein again.

According to a fourth aspect, a communication method is provided. The method may be performed by a terminal device, or may be performed by a component (such as a chip or a circuit) of the terminal device. This is not limited in this application. For ease of description, an example in which the method is performed by a second terminal apparatus is used below for description.

The method may include: The second terminal apparatus sends first sidelink data on a first resource. The second terminal apparatus receives first sidelink feedback information on a first resource element. The first sidelink feedback information indicates a receiving status of the first sidelink data, the first resource element belongs to a second resource, the second resource is a resource corresponding to the first resource, and the second resource includes at least two resource elements.

With reference to the fourth aspect, in some implementations of the fourth aspect, the at least two resource elements are located at different time domain locations and/or different frequency domain locations.

With reference to the fourth aspect, in some implementations of the fourth aspect, an index of the second resource satisfies:

$$\left(P_{ID}+M_{ID}+\Delta1\right)\mathrm{mod}\left(floor\left(\frac{R_{PRB,CS}^{PSFCH}}{L}\right)\right)+\Delta2 .$$

Herein, $P_{ID}$ represents a physical layer source address identifier ID carried in control information, $M_{ID}$ represents an ID indicated by a higher layer for the first sidelink data of a first terminal apparatus during multicast transmission, $R_{PRB,CS}^{PSFCH}$ represents a quantity of resource elements that correspond to the first sidelink data and that are used to send the first sidelink feedback information in a resource block set or in a resource pool, $\Delta1$ and $\Delta2$ represents resource element index offsets, the resource element index offsets are related to a resource mapping location of the first sidelink feedback information, $\Delta1$ and $\Delta2$ are integers greater than or equal to 0, and L is a positive integer.

Optionally, L=1, or L=Q, or L=G, or L=Q×G. Herein, Q represents a quantity of resource elements that are in same time domain and that are in different resource block sets in the at least two resource elements, and G represents a quantity of resource elements that are in a same resource block set and that are in different time domain in the at least two resource elements.

Optionally, the formula $\left(P_{ID}+M_{ID}+\Delta1\right)\mathrm{mod}\left(floor\left(\frac{R_{PRB,CS}^{PSFCH}}{L}\right)\right)+\Delta2$ may also be changed to:

$$\left(P_{ID}+M_{ID}+\Delta1\right)\mathrm{mod}\left(\frac{R_{PRB,CS}^{PSFCH}}{L}\right)+\Delta2 ,$$

that is, floor(A/B) and (A/B) have a same meaning or value.

With reference to the fourth aspect, in some implementations of the fourth aspect, the method further includes: The second terminal apparatus determines the first resource based on the first sidelink feedback information.

With reference to the fourth aspect, in some implementations of the fourth aspect, the first resource element satisfies at least one of the following conditions: the first resource element belongs to a resource in a channel occupancy time COT of the second terminal apparatus; a resource block set corresponding to the first resource element is a resource block set to which the first resource belongs; a resource block set corresponding to the first resource element is a resource block set corresponding to sidelink data sent by the second terminal apparatus; or a resource index of the first resource element is a preset index.

With reference to the fourth aspect, in some implementations of the fourth aspect, the second resource further includes at least one interlaced resource block in frequency domain.

For beneficial effects of the fourth aspect and the possible designs, refer to related descriptions of the second aspect. Details are not described herein again.

According to a fifth aspect, a communication method is provided. The method may be performed by a terminal device, or may be performed by a component (such as a chip or a circuit) of the terminal device. This is not limited in this application. For ease of description, an example in which the method is performed by a first terminal apparatus is used below for description.

The method may include: The first terminal apparatus obtains configuration information. The configuration information indicates a resource that is used to transmit a physical sidelink feedback channel PSFCH in a resource pool, and a quantity of frequency domain elements that are used to transmit the PSFCH in different resource block sets in the resource pool is the same, so that the PSFCH is the same as a resource block set in which a corresponding PSSCH is located. The first terminal apparatus sends the PSFCH to a second terminal apparatus by using the resource that is used to transmit the PSFCH in the resource pool.

For the fifth aspect, refer to related designs in the first aspect. For beneficial effects of the fifth aspect herein, refer to related descriptions of the first aspect. Details are not described herein again.

According to a sixth aspect, a communication apparatus is provided. The apparatus is configured to perform the method in any possible implementation of the first aspect to the fifth aspect. Specifically, the apparatus may include units and/or modules, for example, a processing unit and/or a communication unit, configured to perform the method in any possible implementation of the first aspect to the fifth aspect.

In an implementation, the apparatus is a terminal device. When the apparatus is the terminal device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a seventh aspect, a communication apparatus is provided. The apparatus includes at least one processor, configured to execute a computer program or instructions stored in a memory, to perform the method in any possible implementation of the first aspect to the fifth aspect. Optionally, the apparatus further includes the memory, configured to store the computer program or the instructions. Optionally, the apparatus further includes a communication interface, and the processor reads, through the communication interface, the computer program or the instructions stored in the memory.

**In** an implementation, the apparatus is a terminal device.

**In** another implementation, the apparatus is a chip, a chip system, or a circuit used in a terminal device.

According to an eighth aspect, this application provides a processor, configured to perform the method provided in the first aspect to the fifth aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a ninth aspect, a computer-readable storage medium is provided. The computer-readable medium stores program code to be executed by a device, and the program code is used to perform the method in any possible implementation of the first aspect to the fifth aspect.

According to a tenth aspect, a computer program product including instructions is provided. When the computer program product runs on a computer, the computer is enabled to perform the method in any possible implementation of the first aspect to the fifth aspect.

According to an eleventh aspect, a communication system is provided, including the foregoing first terminal apparatus and second terminal apparatus.

## BRIEF DESCRIPTION OF DRAWINGS

FIG. 1 is a diagram of a wireless communication system applicable to an embodiment of this application;
FIG. 2 is a diagram of a wireless communication system applicable to another embodiment of this application;
FIG. 3 is a diagram of interlacing;
FIG. 4 is a diagram of indicating an available subframe for SL communication by using a bitmap;
FIG. 5 is a diagram of a frequency domain resource in a resource pool;
FIG. 6 is a diagram of PSFCH resource configuration in a resource pool;
FIG. 7 is another diagram of PSFCH resource configuration in a resource pool;
FIG. 8 is a diagram of a PSFCH time domain resource corresponding to a PSSCH;
FIG. 9 is a diagram of PSFCH frequency domain resource allocation;
FIG. 10 is a diagram of PSFCH feedback resource mapping;
FIG. 11 is a diagram of performing LBT by a terminal;
FIG. 12 is a diagram of a communication method 1200 according to an embodiment of this application;
FIG. 13 is a diagram in which a PSFCH resource and a PSSCH resource are in a same RB set;
FIG. 14 is a diagram of a communication method 1400 according to another embodiment of this application;
FIG. 15 is a diagram in which one PSSCH corresponds to a plurality of PSFCH resources;
FIG. 16 is a diagram of indicating a PSFCH resource by a bitmap;
FIG. 17 is a diagram of PSFCH resource division;
FIG. 18 is a diagram of a PSFCH sequence pair;
FIG. 19 is a diagram of frequency division and code division resources corresponding to PSSCH-PSFCH;
FIG. 20 is another diagram of PSFCH resource division;
FIG. 21 is a diagram in which one PSSCH corresponds to a plurality of PSFCH feedbacks in different directions;
FIG. 22 is a diagram of mapping of a PSSCH resource and a corresponding PSFCH resource;
FIG. 23 is another diagram of mapping of a PSSCH resource and a corresponding PSFCH resource;
FIG. 24 is a diagram in which one PSSCH resource corresponds to a plurality of PSFCH resources in time domain;
FIG. 25 is a diagram in which a PSFCH resource includes 1 RPB and a common interlace;
FIG. 26 is a diagram in which a PSFCH resource includes an interlace;
FIG. 27 is a diagram of distinguishing transmission of different PSFCHs through code division when an IRB structure is used;

FIG. 28 is a diagram of a communication apparatus 2800 according to an embodiment of this application;

FIG. 29 is a diagram of another communication apparatus 2900 according to an embodiment of this application; and

FIG. 30 is a diagram of a chip system 3000 according to an embodiment of this application.

## DESCRIPTION OF EMBODIMENTS

The following describes technical solutions of embodiments in this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, or the like. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system. For example, V2X may include vehicle-to-vehicle (vehicle-to-vehicle, V2V), vehicle-to-pedestrian (vehicle-to-pedestrian, V2P), and vehicle-to-infrastructure (vehicle-to-infrastructure, V2I). The infrastructure is, for example, a road side unit (road side unit, RSU) or a network device.

A terminal device in embodiments of this application includes various devices having a wireless communication function, and the terminal device may be configured to connect to a person, an object, a machine, and the like. The terminal device may be widely applied to various scenarios, for example, cellular communication, D2D, V2X, peer-to-peer (peer-to-peer, P2P), M2M, MTC, IoT, virtual reality (virtual reality, VR), augmented reality (augmented reality, AR), industrial control, autonomous driving, telemedicine, a smart grid, smart furniture, a smart office, smart wear, smart transportation, a smart city drone, a robot, remote sensing, passive sensing, positioning, navigation and tracking, and autonomous delivery. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, a flight device (for example, an unmanned aerial vehicle, a helicopter, a multi-helicopter, a four-helicopter, or an airplane), a ship, a remote control device, a smart home device, or an industrial device, may be an apparatus built in the foregoing device (for example, a communication module, a modem, or a chip in the foregoing device), or may be another processing device connected to the wireless modem. For ease of description, an example in which the terminal device is a terminal or a UE is used below for description.

It should be understood that, in some scenarios, the UE may further serve as a base station. For example, the UE may act as a scheduling entity that provides a sidelink signal between UEs in a V2X scenario, a D2D scenario, a P2P scenario, or the like.

In embodiments of this application, an apparatus configured to implement a function of the terminal device, namely, a terminal apparatus, may be a terminal device, or may be an apparatus, for example, a chip system or a chip, that can support the terminal device in implementing the function. The apparatus may be mounted in the terminal device. In embodiments of this application, the chip system may include a chip, or may include a chip and another discrete component.

A network device in embodiments of this application may be a device configured to communicate with the terminal device. The network device may alternatively be referred to as an access network device or a radio access network device. For example, the network device may be a base station. A network device in embodiments of this application may be a radio access network (radio access network, RAN) node (or device) that connects the terminal device to a wireless network. The base station may cover various names in the following in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmitting point (transmitting point, TP), a primary station, a secondary station, a multi-standard radio (multi-standard radio, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that implements a base station function in D2D, V2X, and M2M communication, a network side device in a 6G network, a device that implements a base station function in a future communication system, or the like. The base station may support networks of a same access technology or different access technologies. A specific technology and a specific device form that are used by the network device are not limited in embodiments of this application.

The base station may be stationary or mobile. For example, a helicopter or an unmanned aerial vehicle may be configured as a mobile base station, and one or more cells may move based on a location of the mobile base station. In other examples, a helicopter or an unmanned aerial vehicle may be configured as a device for communicating with another base station.

The network device and the terminal device may be deployed on land, including an indoor or outdoor device, a hand-held device, or a vehicle-mounted device; may be deployed on water; or may be deployed on an airplane, a balloon, and a satellite in the air. Scenarios in which the network device and the terminal device are located are not limited in embodiments of this application.

First, a network architecture applicable to this application is briefly described as follows.

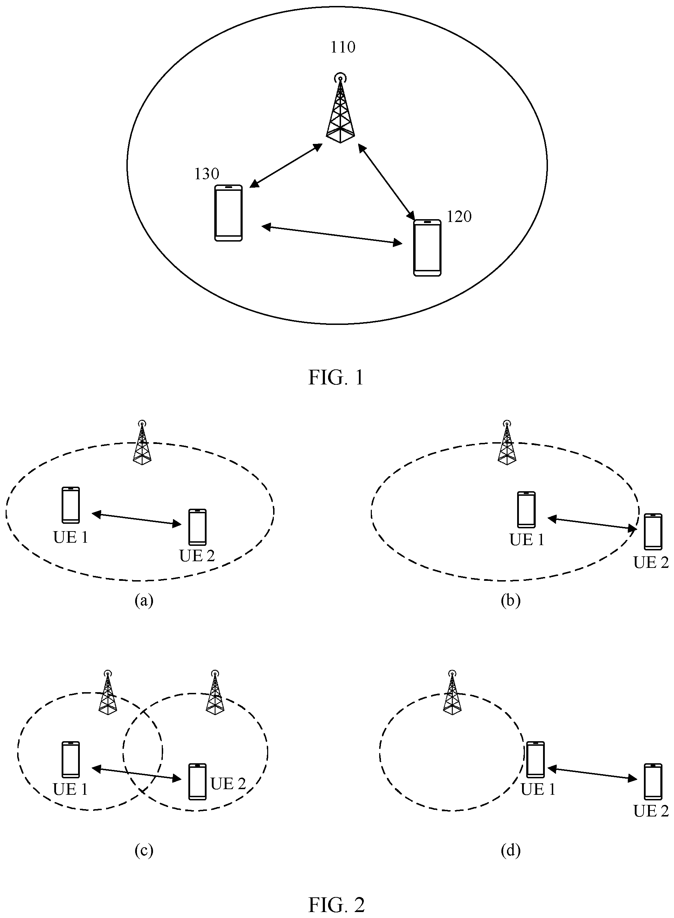

FIG. 1 is a diagram of a wireless communication system applicable to an embodiment of this application. As shown in FIG. 1, the wireless communication system may include at least one network device, for example, a network device 110 shown in FIG. 1. The wireless communication system may further include at least one terminal device, for example, a terminal device 120 and a terminal device 130 shown in FIG. 1. A plurality of antennas may be configured for both the network device and the terminal device, and the network device and the terminal device may communicate with each other by using a multi-antenna technology. The terminal devices may directly communicate with each other. A link for direct communication between the terminal devices may be referred to as a sidelink (sidelink, SL), and direct communication between the terminal devices may be referred to as SL communication.

When the network device communicates with the terminal device, the network device may manage one or more cells, and one cell may have an integer quantity of terminal devices. Optionally, the network device 110 and the terminal device 120 form a single-cell communication system. Without loss of generality, the cell is referred to as a cell #1. The network device 110 may be a network device in the cell #1, or the network device 110 may serve a terminal device (for example, the terminal device 120) in the cell #1.

It should be noted that the cell may be understood as an area within coverage of a radio signal of the network device.

FIG. 2 is a diagram of a wireless communication system applicable to another embodiment of this application. As shown in FIG. 2, embodiments of this application may be applied to an SL communication scenario, and support a communication scenario with network coverage and a communication scenario without network coverage. Scenarios shown in (a) to (c) in FIG. 2 are scenarios in which a UE 1 is in network coverage, and a scenario shown in (d) in FIG. 2 is a scenario in which both the UE 1 and a UE 2 are in no network coverage. In the scenarios shown in (a) to (c) in FIG. 2, the UE 1 may communicate with the UE 2 by using a resource scheduled by a network device, and the resource may be referred to as a licensed resource or a licensed frequency band; or the UE 1 may select a resource from a resource pool through resource self-selection, to communicate with the UE 2, and the resource may be referred to as an unlicensed resource or an unlicensed frequency band. In the scenario shown in (d) in FIG. 2, because both the UE 1 and the UE 2 are in no network coverage, the UE 1 and the UE 2 may communicate in a resource self-selection manner. The resource is a time-frequency resource.

It should be understood that FIG. 1 and FIG. 2 are simplified diagrams of examples for ease of understanding. The wireless communication system may further include another network device or another terminal device that is not shown in FIG. 1 and FIG. 2. Embodiments of this application are applicable to any communication scenario in which a sending end device communicates with a receiving end device.

For ease of understanding of embodiments of this application, several basic concepts in embodiments of this application are briefly described. It should be understood that basic concepts described below are briefly described by using basic concepts specified in a current protocol as an example, but embodiments of this application are not limited to being applied only to a currently existing system. Therefore, names used when the currently existing system is used as an example for description are all functional descriptions, and specific names are not limited, indicate only functions, and may be correspondingly expanded to another system, for example, a 6G system or a future communication system.

1. Licensed spectrum and unlicensed spectrum

Spectra used in a wireless communication system are classified into two types: a licensed spectrum (licensed spectrum) and an unlicensed spectrum (unlicensed spectrum). In the licensed spectrum, a UE may use a spectrum resource based on scheduling performed by a network device. The following mainly describes the unlicensed spectrum.

In the unlicensed spectrum, a sending device may use a spectrum resource through contention. In a possible manner, the sending device contends for a channel through listen-before-talk (listen-before-talk, LBT), to use a channel resource.

2. LBT

LBT is a channel access rule based on random backoff (random backoff). Before accessing a channel and starting to send data, a UE first senses (senses) whether the channel is idle (idle). If the channel has been idle for a period of time, the channel can be occupied. If the channel is not idle, the channel can be occupied only after the channel becomes idle. In a possible implementation, energy-based detection and signal class-based detection are used to determine whether a channel is idle. The energy-based detection is used as an example. When detected energy exceeds a detection threshold, it is determined that the channel is busy, in other words, access to the channel is not allowed. When the detected energy is lower than the detection threshold for a period of time, it is determined that the channel is idle, in other words, access to the channel is allowed.

For example, the UE performs LBT on each 20 MHz channel. To avoid interference between different channels, the UE does not send data on the entire 20 MHz bandwidth, but reserves a part of frequency band resources as a guard bandwidth (guard bandwidth), and sends data on a remaining frequency domain resource. The available resource used for sending data may be referred to as a resource block set (RB set). When the UE performs LBT operations on a plurality of consecutive 20 MHz channels and successfully accesses the channel, a guard bandwidth between RB sets may be used to transmit data, thereby improving resource utilization. In embodiments of this application, an LBT channel, a channel, and an RB set are sometimes alternately used.

UEs may share an unlicensed spectrum resource with each other. For example, if a specific UE obtains permission to use a channel through LBT, the UE may occupy the channel in a period of time, and the period of time may be referred to as a channel occupancy time (channel occupancy time, COT). The UE may share the permission to use the channel in the COT with another device, that is, the UE may share a resource shared in the COT, including a time domain resource and a frequency domain resource, with the another device. The another device may send data by using the resource shared by the UE.

For example, the LBT mechanism is generally classified into the following four types.

Category 1 LBT (category 1 LBT, Cat 1 LBT): Sending is performed immediately after a short switching gap (switching gap), and the category 1 LBT is used for a communication device to perform sending immediately after a switching gap from a receiving state to a sending state in a COT. Generally, a time of the switching gap cannot be greater than 16 μs.

Category 2 LBT (Category 2 LBT, Cat 2 LBT): The category 2 LBT is LBT without random backoff, and is used for a communication device to perform sending without random backoff after the communication device senses that a channel is in an idle state and the idle state lasts for a period of determined time.

Category 3 LBT (Category 3 LBT, Cat 3 LBT): The category 3 LBT is random backoff LBT with a fixed-size contention window (contention window), and is used for a communication device to generate a random number N based on the fixed-size contention window and perform sending after the communication device senses that a channel is in an idle state and and the idle state lasts for a period of time determined based on the random number N. A size of the contention window is related to a minimum value and a maximum value of N.

Category 4 LBT (Category 4 LBT, Cat 4 LBT): The category 4 LBT is random backoff LBT with a variable-size contention window, and is used for a communication device to generate a random number N based on the variable-size contention window and perform sending after the communication device senses that a channel is in an idle state and and the idle state lasts for a period of time determined based on the random number N. A size of the contention window is related to a minimum value and a maximum value of N, and the communication device may change the size of the contention window.

An NR-U device complies with the 3GPP protocol, and uses an LBT mechanism as a channel access method. Specifically, the NR-U device uses the following types of LBT.

Type 1 LBT: Cat 4 LBT. The NR-U device can access a channel and send data only after performing random backoff. Specifically, a network device or a terminal device may initiate transmission after the network device or the terminal device first senses that a channel is idle in a sensing slot duration (sensing slot duration) of a period of extended duration (defer sensing) (the time is denoted as $T_d$) and after a counter N in the following step 4 is zero. Specifically, according to the following steps, the counter N is adjusted by sensing the channel to obtain an additional sensing slot duration.

Step 1: Set N=$N_{init}$, and perform step 4. Herein, $N_{init}$ is a random number ranging from 0 to $CW_p$, , and $CW_p$ is a contention window (contention window).

Step 2: If N>0, the network device or the terminal device selects to decrease a counter value, for example, sets N=N-1.

Step 3: Sense the channel to obtain the additional sensing slot duration, and if a channel in the additional sensing slot duration is idle, perform step 4; otherwise, perform step 5.

Step 4: If N=0, stop; otherwise, perform step 2.

Step 5: Sense the channel, until it is sensed, in another $T_d$, that the channel is busy, or it is sensed, in another $T_d$, that all sensing slots are detected as that the channel is idle.

Step 6: If it is detected that the channel is idle in the all sensing slots in the another $T_d$, perform step 4; otherwise, perform step 5.

$T_d$ includes $T_f$=16 μs and subsequent consecutive $m_p$ sensing slot durations (denoted as $T_{sl}$). For a value of $m_p$, see Table 1. Herein, $CW_{min,p}$ is a minimum value of the contention window, $CW_{max,p}$ is a maximum value of the contention window, and $W_{min,p} \leq CW_p \leq CW_{max,p}$. $T_{mcot,p}$ is a maximum length of the COT, that is, the COT transmitted by the network device or the terminal device on the channel does not exceed $T_{mcot,p}$.

Table 1

| Channel access priority level (p) | $m_p$ | $CW_{min,\ p}$ | $CW_{max,\ p}$ | $T_{mcot,\ p}$ | $CW_p$ value |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 ms or 10 ms | {15, 31, 63 } |
| 4 | 7 | 15 | 1023 | 8 ms or 10 ms | {15, 31, 63, 127, 255, 511, 1023} |

Type 2A LBT: Cat 2 LBT with a gap of 25 us. After sensing that the channel is idle for 25 us, the NR-U device may access the channel and send data.

Type 2B LBT: Cat 2 LBT with a gap of 16 μs. After sensing that the channel is idle for 16 μs, the NR-U device may access the channel and send data.

Type 2C LBT: Cat 1 LBT with a maximum gap of 16 μs. The NR-U device does not need to sense the channel, and may directly access the channel and send data after the maximum switching gap of 16 μs in the COT.

3. Interlacing

The protocol defines an interlaced resource block (interlaced resource block), which is referred to as an interlace (interlace) hereinafter. An interlaced m may be formed by common resource blocks (common resource blocks, CRBs) {$m,M+m,2M+m,3M+m,...$}, where M is a quantity of interlaces, and $m \in \{0,1,...,M-1\}$. Optionally, a value of M is related to a sub-carrier spacing (sub-carrier spacing, SCS). For example, when $\mu$=0 (that is, the sub-carrier spacing is 15 kHz), the value of M is 10. For another example, when $\mu$=1 (that is, the sub-carrier spacing is 30 kHz), the value of M is 5.

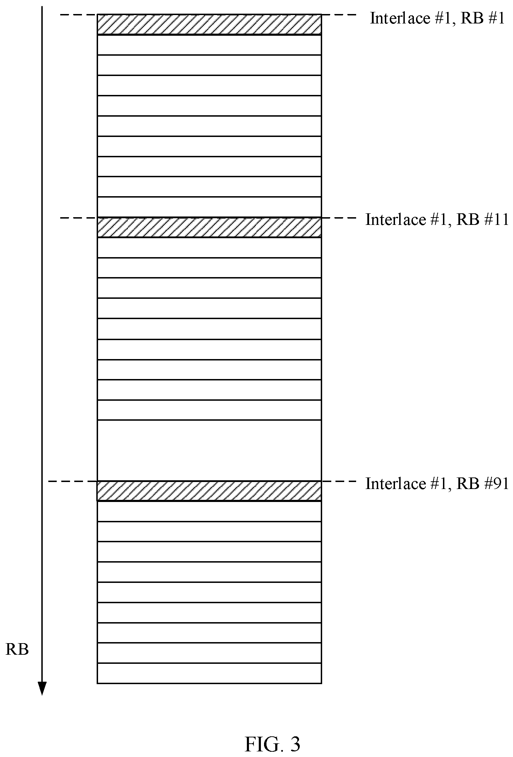

FIG. 3 is a diagram of interlacing. As shown in FIG. 3, for a 15 kHz SCS, there are 10 interlaces, and each uses a 10th PRB.

4. SL communication resource pool

SL communication may be performed based on a resource pool (resource pool). The resource pool is a time-frequency resource dedicated to SL communication. Alternatively, the resource pool may be understood as a set of resources that can be used for SL communication, that is, a set of time domain resources and frequency domain resources used for SL communication.

A resource pool used for SL communication may be referred to as a resource pool for short, or may be referred to as an SL resource pool. For brevity, the following uses the resource pool for description. The resource pool may also be referred to as a channel (channel), an operating channel (Operating channel), and a nominal channel (nominal channel) bandwidth (bandwidth). In other words, the resource pool, the channel, and the bandwidth are all represent the set of resources that can be used for SL communication. There is no restriction on naming of the resource pool.

For a time domain resource in the resource pool, for example, the network device may use a bitmap (bitmap) and periodically repeat the bitmap to indicate a set of subframes used for SL communication in all subframes in a system.

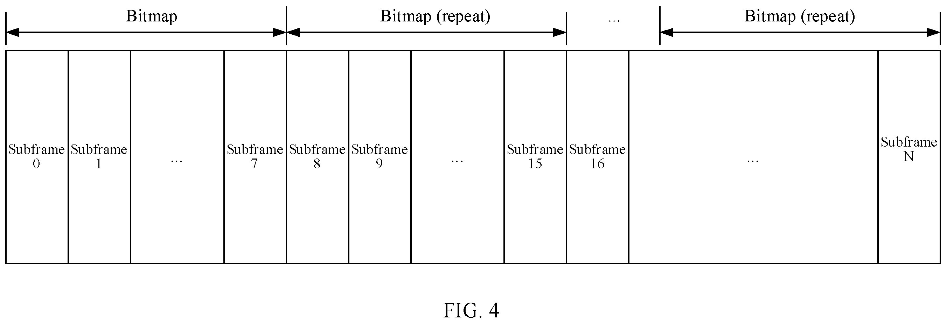

FIG. 4 is a diagram of indicating an available subframe for SL communication by using a bitmap. As shown in FIG. 4, a length of the bitmap is 8 bits (bits). A quantity of symbols occupied by SL communication in each subframe is M symbols, and M is an integer greater than or equal to 1. M may be considered as a time domain transmission duration or a time domain transmission unit of an SL.

For a frequency domain resource in the resource pool, for example, the network device may divide a frequency band used for SL communication into several subchannels, and each subchannel includes a specific quantity of resource blocks.

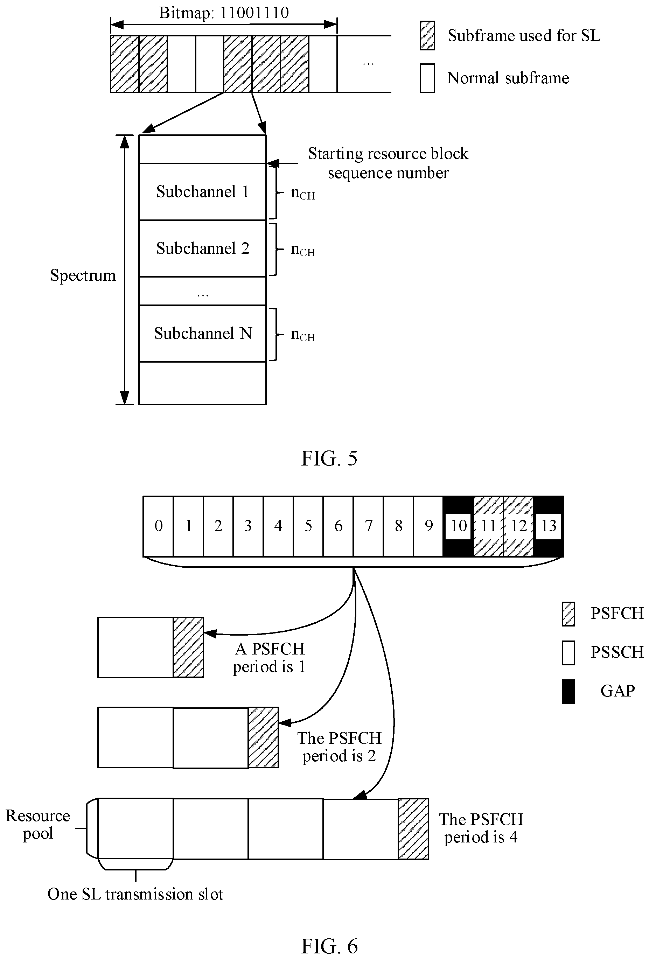

FIG. 5 is a diagram of the frequency domain resource in the resource pool. As shown in FIG. 5, the network device may indicate the following parameters: a sequence number of a 1st resource block of the frequency resource used for SL communication, a total quantity N of subchannels included in the resource pool, and a quantity $n_{CH}$ of resource blocks included in each subchannel. One piece of SL transmission may occupy one or more subchannels. When a resource for SL communication is scheduled, scheduling may be performed by using a subchannel as a granularity in frequency domain.

5. Physical sidelink feedback channel (physical sidelink feedback channel, PSFCH) resource

The PSFCH resource is a resource used to transmit a PSFCH. For example, one PSFCH occupies two consecutive OFDM symbols in time domain, and is one PRB in frequency domain.

In a possible situation, the PSFCH may be used to transmit feedback information. For example, for one piece of physical sidelink shared channel (physical sidelink share channel, PSSCH) transmission, if a sending end carries hybrid automatic repeat request acknowledgement (hybrid automatic repeat request acknowledgement, HARQ-ACK) feedback enabling information in control information, a receiving end may feed back corresponding acknowledgement (acknowledgement, ACK) or negative acknowledgement (negative acknowledgement, NACK) information based on a decoding result of the PSSCH. The ACK or NACK information is transmitted through the PSFCH.

It may be understood that, the foregoing is an example for description, and this is not limited. For example, the PSFCH may also be used for a scheme 2 (Scheme 2) conflict indication in inter-UE coordination (inter-UE coordination, IUC). In other words, if a PSFCH resource is configured in the resource pool, all the PSFCH resource may be used to transmit a specific type of information, for example, feedback information or a conflict indication; or a part of the PSFCH resource may be used to transmit one type of information, and another part of the PSFCH resource may be used to transmit another type of information, for example, a part is used for feedback information, another part is used for the scheme 2 conflict indication. This is not limited.

The PSFCH resource may be a periodic resource configured in the resource pool. For example, it is assumed that a periodic parameter is $N_{PSSCH}^{PSFCH}$. For example, a value of $N_{PSSCH}^{PSFCH}$ may be 0, 1, 2, or 4. If $N_{PSSCH}^{PSFCH} = 0$, it indicates that there is no PSFCH resource in the resource pool, that is, a resource in the resource pool cannot be used to transmit the PSFCH. If $N_{PSSCH}^{PSFCH} \neq 0$, it indicates that in the resource pool, there is one PSFCH resource in every $N_{PSSCH}^{PSFCH}$ SL slots in a time window.

FIG. 6 is a diagram of PSFCH resource configuration in the resource pool. As shown in FIG. 6, if a PSFCH period is 1, that is, $N_{PSSCH}^{PSFCH} = 1$, there is one PSFCH resource in every one SL slot in a time window. If the PSFCH period is 2, that is, $N_{PSSCH}^{PSFCH} = 2$, there is one PSFCH resource in every two SL slots in a time window. If the PSFCH period is 4, that is, $N_{PSSCH}^{PSFCH} = 4$, there is one PSFCH resource in every four SL slots in a time window.

It can be learned from FIG. 6 that, if a PSFCH resource is configured in the resource pool, a PSFCH resource is configured once in every $N_{PSSCH}^{PSFCH}$ slots. The following briefly describes steps of determining a PSFCH resource corresponding to each subchannel. The following steps are examples for description, and this is not limited in this application.

Step 1: Configure a bitmap of a PSFCH frequency domain resource for the resource pool, where the bitmap indicates whether a PRB on the frequency domain resource in which the resource pool is located can be used as a PSFCH resource.

A length of bit information included in the bitmap is equal to a quantity of PRBs in the resource pool. A PRB corresponding to a bit value of 1 in the bitmap may be used to transmit a PSFCH, and a PRB corresponding to a bit value of 0 in the bitmap cannot be used to transmit a PSFCH. Further, if the PSFCH resource is used to transmit an HARQ-ACK, the PSFCH resource may be represented by a "sl-PSFCH-RB-Set" bitmap, that is, the PRB corresponding to the bit value of 1 in the bitmap may be used to transmit the HARQ-ACK, and the PRB corresponding to the bit value of 0 in the bitmap cannot be used to transmit the HARQ-ACK. In still another example, a reverse representation manner may also be used. If the PSFCH resource is used for the scheme 2 conflict indication in IUC, the PSFCH resource may be represented by a "sl-RB-SetPSFCH" bitmap, that is, the PRB corresponding to the bit value of 1 in the bitmap may be used for the scheme 2 conflict indication in IUC, and the PRB corresponding to the bit value of 0 in the bitmap cannot be used for the scheme 2 conflict indication in IUC. For example, locations at which the bit value of 1 in "sl-PSFCH-RB-Set" and "sl-RB-SetPSFCH" do not overlap. In this way, a case in which a same location is used to transmit both the HARQ-ACK and the scheme 2 conflict indication in IUC can be avoided. It may be understood that, the "sl-PSFCH-RB-Set " bitmap represents one bitmap, and the "sl-RB-SetPSFCH" bitmap also represents one bitmap.

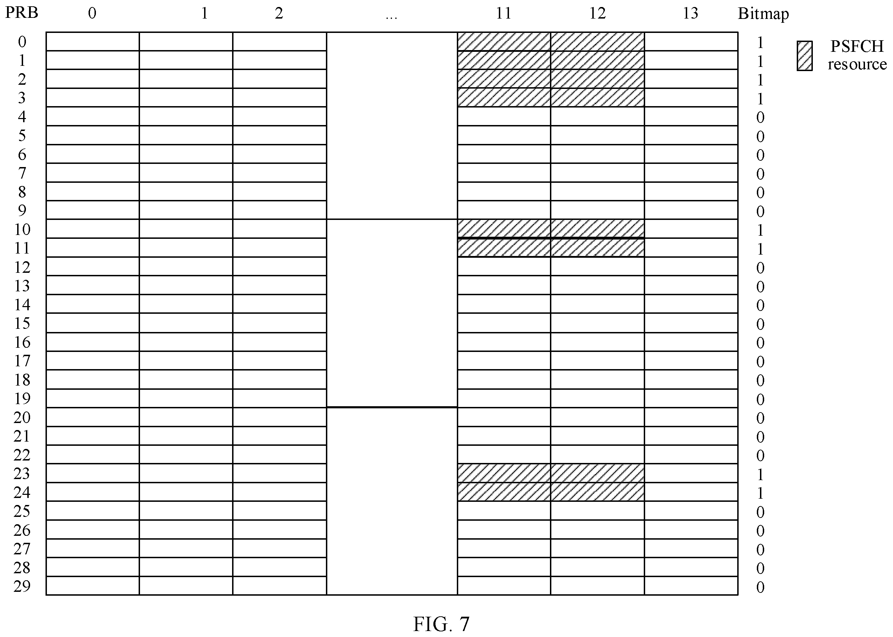

FIG. 7 is another diagram of PSFCH resource configuration in the resource pool. As shown in FIG. 7, assuming that one subchannel includes 10 PRBs, and the SL resource pool includes three subchannels in total, a bitmap indicating a PSFCH frequency domain resource in the SL resource pool includes 3×10=30 bits in total, to indicate whether each PRB can be used to transmit a PSFCH. The bitmap may be used to indicate an HARQ-ACK resource, or may be used to indicate a scheme 2 conflict indication resource. An example shown in FIG. 7 is used as an example. The bitmap indicates that first four PRBs of some subchannels may be used to transmit PSFCHs, first two PRBs of some subchannels may be used to transmit PSFCHs, and two middle PRBs of some subchannels may be used to transmit PSFCHs.

Step 2: Determine a quantity of PSFCH resources corresponding to each subchannel. For example, because every $N_{PSSCH}^{PSFCH}$ PSSCH slots correspond to one PSFCH slot, for the resource pool including $N_{subch}$ subchannels, a quantity of PSFCH resources corresponding to each subchannel is $M_{subch,slot}^{PSFCH} = M_{PRB,set}^{PSFCH} \big/ \left( N_{subch} \cdot N_{PSSCH}^{PSFCH} \right)$ .

Herein, $M_{PRB,set}^{PSFCH}$ represents a quantity of PRBs of the PSFCH frequency domain resource, that is, indicates a total quantity of bits whose value is 1 in a bitmap of the PSFCH frequency domain resource.

Step 3: Determine a time domain location of the PSFCH. Considering a decoding capability of the receiving end, the receiving end cannot immediately perform feeding back after receiving the PSSCH. Therefore, a time gap K of a PSSCH feedback is defined in a standard. To be specific, the PSSCH transmits the PSFCH in a 1st available slot including the PSFCH resource, and the slot is at least K slots away from a slot in which the PSSCH is located.

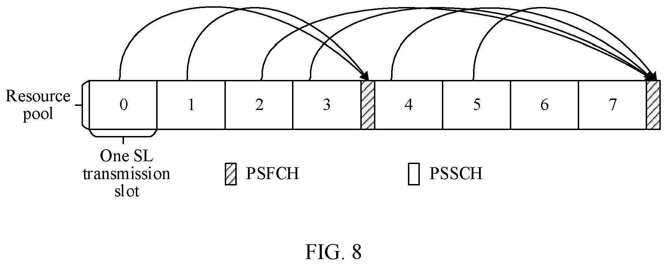

FIG. 8 is a diagram of a PSFCH time domain resource corresponding to the PSSCH. As shown in FIG. 8, when K=2, PSSCHs carried in slots 0 and 1 may be fed back on a PSFCH resource in a slot 3, and PSSCHs carried in slots 2, 3, 4, and 5 are fed back on a PSFCH resource in which a slot 7 is located. Because the slots 2, 3, 4, and 5 are fed back on a PSFCH resource of one slot, the slots 2, 3, 4, and 5 may also be referred to as a PSSCH bundling window length.

Step 4: Sequentially allocate PSFCH available resources in a PSFCH feedback slot to each subchannel in a feedback period in a time-domain followed by frequency-domain manner.

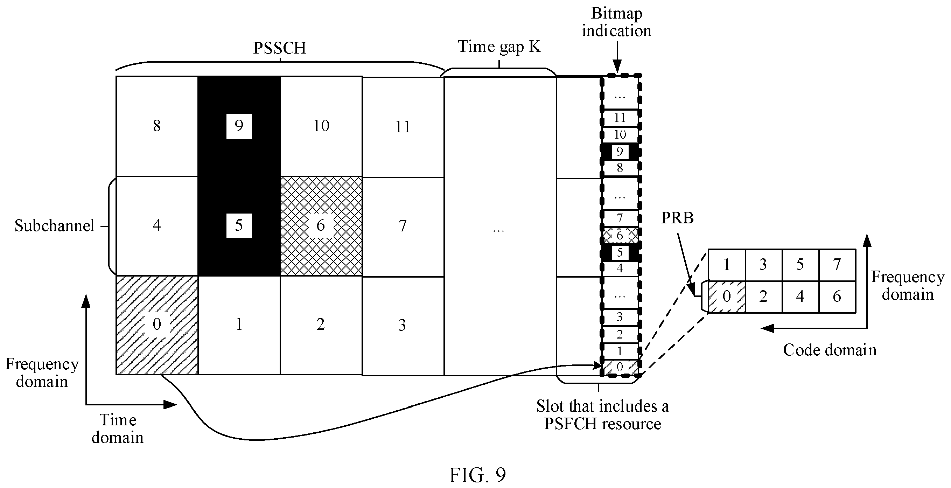

FIG. 9 is a diagram of PSFCH frequency domain resource allocation. As shown in FIG. 9, after receiving the PSSCH, the terminal may feed back a PSFCH, and a time gap between the PSSCH and the PSFCH is K. When $N_{PSSCH}^{PSFCH} = 4$ , a PSFCH resource corresponding to each subchannel in four bundled PSSCH slots is shown by a number in the figure, that is, PSFCH feedback resources of several PRBs are allocated to each subchannel in each slot. It is expressed by using a formula as follows: For an $i$th slot in $N_{PSSCH}^{PSFCH}$ bundled PSSCH slots, if a frequency domain subchannel number in the resource pool of the $i$th slot is j, a PSFCH resource number corresponding to the $i$th slot is

$$\left[ \left( i + j \cdot N_{PSSCH}^{PSFCH} \right) \cdot M_{subch,slot}^{PSFCH}, \left( i + 1 + j \cdot N_{PSSCH}^{PSFCH} \right) \cdot M_{subch,slot}^{PSFCH} - 1 \right]$$ . If the terminal occupies two subchannels for transmission, for PSSCHs shown by black squares in FIG. 9, PSFCH resource numbers corresponding to the PSSCHs are also 5 and 9 respectively, and are inconsecutive in frequency domain.

6. PSFCH sequence

The PSFCH sequence is generated by performing phase rotation on a base sequence, and a plurality of different sequences may be generated by using different phase rotation values on one base sequence. A root sequence number is used to generate the base sequence. The root sequence number may also be referred to as a root sequence index, and the base sequence may also be referred to as a root sequence. The following uses a low peak-to-average power ratio (low peak-to-average power ratio, low-PAPR) sequence as an example for description.

A relationship between a sequence $r^{\alpha}(n)$, a base sequence r(n), and a phase rotation value $\alpha$ may satisfy the following formula:

$$r^{\alpha}(n) = r \times e^{j\alpha n}, 0 \leq n \leq M_{ZC} .$$

Herein, $M_{ZC}$ represents a length of the base sequence. A plurality of terminals may use different $\alpha$ to generate distinguishable PSFCH sequences, and each PSFCH sequence may be code-division multiplexed on one RB for sending. Generally, the terminal needs to feed back ACK and NACK information, that is, at least two sequences may be allocated to one terminal, and correspond to different $\alpha$ values. The phase rotation value $\alpha$ may satisfy the following formula:

$$\alpha_l = \frac{2\pi}{N_{sc}^{RB}}\left(\left(m_0 + m_{cs} + n_{cs}(n_{s,f}^{\mu}, l+l')\right) \bmod N_{sc}^{RB}\right).$$

Herein, $N_{sc}^{RB}$ represents a quantity of sub-carriers in one RB, and as an example, $N_{sc}^{RB}=12$ . $n_{s,f}^{\mu}$ represents a slot number (slot number) corresponding to a current sub-carrier spacing $\mu$ in a radio frame. $l$ represents a number of an OFDM symbol in a PSFCH transmission slot, and $l=0$ represents a 1st OFDM symbol of a current PSFCH transmission resource. $l'$ represents a symbol index on the current PSFCH transmission resource relative to the 1st OFDM symbol. $m_0$ represents a phase of an ACK in a PSFCH feedback resource pair. $m_{cs}$ represents a phase offset of a NACK sequence relative to an ACK sequence in the PSFCH feedback resource pair.

The function $n_{cs}(n_c,l)$ is represented as $n_{cs}(n_{s,f}^{\mu}, l) = \sum_{m=0}^{7} 2^m c\left(8 N_{symb}^{slot} n_{s,f}^{\mu} + 8l + m\right)$ . Herein, $N_{symb}^{slot}$ represents a quantity of consecutive time domain symbols in one slot, and for example, $N_{symb}^{slot}=14$ . c(i) represents a value of a sequence number i in a pseudo-random sequence. A manner of generating the pseudo-random sequence is not limited in this application.

7. Scenario supporting a PSFCH feedback

V2X is used as an example. V2X supports three scenarios: a unicast scenario, a multicast scenario, and a broadcast scenario. An HARQ feedback is supported in the unicast scenario and the multicast scenario. There are two multicast scenarios: a multicast 1 scenario and a multicast 2 scenario.

In the unicast scenario, a sending terminal and a receiving terminal form a unicast connection pair. After correctly receiving control information from the sending terminal, the receiving terminal sends, based on HARQ enabling indication information of the control information, a PSFCH sequence carrying ACK information to the sending terminal if a PSSCH is correctly decoded; otherwise, the receiving terminal feeds back a PSFCH sequence carrying NACK information.

In the multicast 1 (negative acknowledgement-only (negative acknowledgement-only, NACK-only)) scenario, if a terminal in a group can correctly decode a physical sidelink control channel (physical sidelink control channel, PSCCH) corresponding to a PSSCH, but the PSSCH fails to be decoded, the terminal feeds back a PSFCH sequence carrying NACK information; otherwise, the terminal does not feed back any information.

In the multicast 2 (NACK/ACK) scenario, if a terminal in a group can correctly decode a PSCCH corresponding to a PSSCH, the terminal feeds back a PSFCH sequence carrying NACK information if the PSSCH fails to be decoded based on HARQ enabling indication information in control information; otherwise, the terminal feeds back a PSFCH sequence carrying NACK information.

(8) Time element and frequency domain element

Data or information may be carried on a time-frequency resource.

In time domain, the time-frequency resource may include one or more time domain elements (or may also be referred to as time units). A time domain element may be a symbol, a mini-slot (mini-slot), a slot (slot), a partial slot (partial slot), a subframe (subframe), a radio frame (frame), or the like.

In frequency domain, the time-frequency resource may include one or more frequency domain elements. A frequency domain element may be a resource element (resource element, RE), a resource block (resource block, RB), a subchannel (subchannel), a resource pool (resource pool), a bandwidth (bandwidth), a bandwidth part (bandwidth part, BWP), a carrier (carrier), a channel (channel), an interlace (interlace) RB, or the like.

As described above, whether a PRB on a frequency domain resource in which the resource pool is located can be used as a PSFCH resource may be indicated by configuring the bitmap, that is, a length of bit information included in the bitmap is equal to a quantity of PRBs in the resource pool. PRB resources whose bit values are 1 in the bitmap form a PSFCH resource, and then the PSSCH and the PSFCH are in one-to-one correspondence according to a mapping relationship between the PSSCH and the PSFCH. Because the bitmap represents RPB resources in the entire resource pool, when the resource pool includes a plurality of RB sets, an RB set in which the PSFCH resource is located may be different from an RB set in which the corresponding PSSCH resource is located. In an unlicensed frequency band, the UE needs to perform an LBT operation before sending data. If a channel on which the PSFCH resource is located is different from a channel on which the corresponding PSSCH resource is located, the UE also needs to perform LBT on the channel on which the PSFCH resource is located.

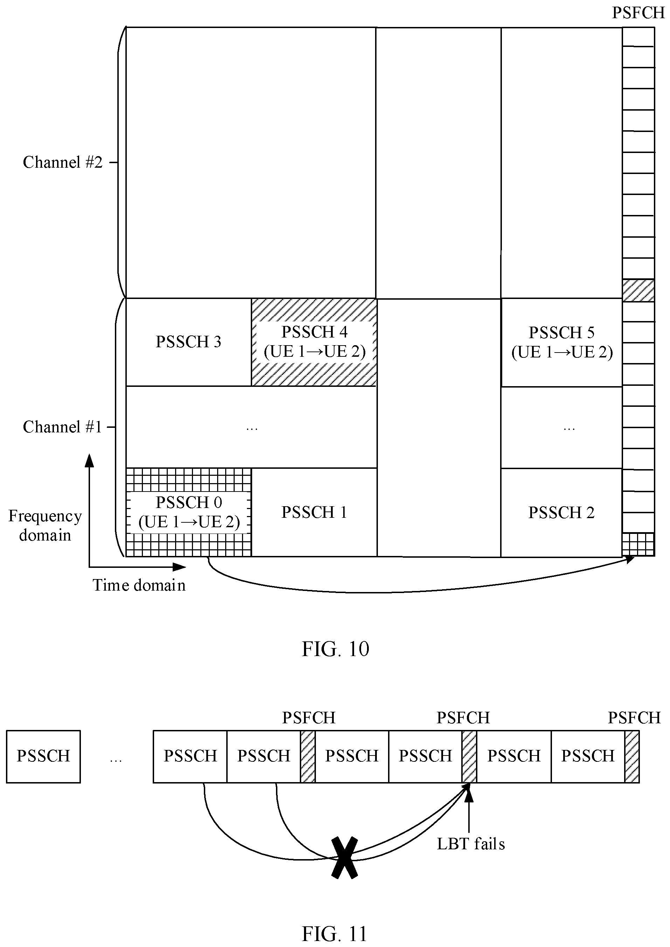

FIG. 10 is a diagram of PSFCH feedback resource mapping.

As shown in FIG. 10, a resource of a PSSCH 0 sent by a UE 1 to a UE 2 is on a channel #1, a resource of a PSFCH used to feed back the PSSCH 0 is on the channel #1, and the two are on a same channel. A resource of a PSSCH 4 sent by the UE 1 to the UE 2 is on the channel #1, and a resource of a PSFCH used to feed back the PSSCH 4 is on a channel #2. The two channels are different. The UE 2 feeds back a receiving state of the PSSCH 4, and needs to perform an LBT operation on the channel #2.

FIG. 11 is a diagram of performing LBT by a terminal.

As shown in FIG. 11, in an unlicensed frequency band, the terminal may fail to access a channel before sending a PSFCH, that is, LBT fails. In this case, if LBT fails, the UE cannot send the PSFCH. Consequently, a peer end cannot receive feedback information of a PSSCH in time, and system performance is reduced.

Based on the foregoing analysis, this application provides a solution. On one hand, it is designed that a PSSCH resource and a corresponding PSFCH resource are in a same RB set, to increase a probability that a terminal successfully feeds back sidelink feedback information. On the other hand, a PSFCH feedback opportunity is increased. For example, one PSSCH may correspond to a plurality of PSFCH resources, to increase a probability that the terminal device successfully feeds back a PSFCH.

It may be understood that the term "and/or" in this specification describes only an association relationship between associated objects and indicates that three relationships may exist. For example, A and/or B may represent the following three cases: Only A exists, both A and B exist, and only B exists. In addition, the character "/" in this specification generally indicates an "or" relationship between the associated objects.

It may further be understood that, in this application, an "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, the to-be-indicated information is indicated in a plurality of manners, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information pre-agreed on (for example, stipulated in a protocol), to reduce indication overheads to some extent.

With reference to the accompanying drawings, the following describes in detail a method provided in embodiments of this application. Embodiments provided in this application may be applied to the network architecture shown in FIG. 1 or FIG. 2. This is not limited.

In the following embodiments, sending sidelink data and sending a PSSCH are alternately used sometimes, and both indicate that data on the PSSCH is sent, that is, data is sent on the PSSCH. Sending sidelink feedback information and sending a PSFCH are sometimes alternately used, and both indicate that information on the PSFCH is sent, that is, the feedback information is sent on the PSFCH.

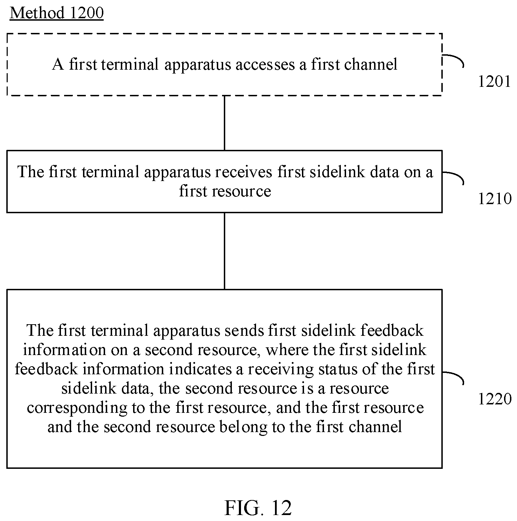

FIG. 12 is a diagram of a communication method 1200 according to an embodiment of this application. The method 1200 may include the following steps.

1210: A first terminal apparatus receives first sidelink data on a first resource.

The first sidelink data represents data received by the first terminal apparatus on a sidelink, for example, data received by the first terminal apparatus on a PSSCH.

That a first terminal apparatus receives first sidelink data on a first resource may also be replaced with: the first terminal apparatus receives the first sidelink data on a first channel or a first RB set. The first channel represents a channel on which the first resource is located, and the first RB set represents an RB set on which the first resource is located.

For example, a second terminal apparatus sends the first sidelink data on the first resource, and correspondingly, the first terminal apparatus receives the first sidelink data on the first resource. The first terminal apparatus may send feedback information to the second terminal apparatus based on a receiving status of the first sidelink data, for example, the feedback information is denoted as the first sidelink feedback information.

Before step 1210, the method 1200 further includes step 1201.

1201: The first terminal apparatus accesses the first channel.

The first terminal apparatus accesses the first channel, and may receive the first sidelink data on the first channel. A manner in which the first terminal apparatus accesses the first channel is not limited. In a possible implementation, the first terminal apparatus accesses the first channel in an LBT manner. For example, the first terminal apparatus may access the first channel in a Type 1 manner, that is, the first terminal apparatus may actively preempt the first channel. For another example, the first terminal apparatus may access the first channel in a Type 2 manner, that is, the first channel is shared by the first terminal apparatus and another terminal apparatus.

1220: The first terminal apparatus sends the first sidelink feedback information on a second resource, where the first sidelink feedback information indicates the receiving status of the first sidelink data, the second resource is a resource corresponding to the first resource, and the first resource and the second resource are a same channel.

Because the first resource and the second resource are a same channel, that the first terminal apparatus sends the first sidelink feedback information on a second resource may also be replaced with: the second terminal apparatus sends the first sidelink feedback information on the first channel or the first RB set.

The first sidelink feedback information represents feedback information sent by the first terminal apparatus on the sidelink, for example, data sent by the first terminal apparatus on a PSFCH.

The second resource is the resource corresponding to the first resource, that is, the second resource is a resource used to feed back the first sidelink feedback information of the first sidelink data received on the first resource. For example, if the first terminal apparatus receives the PSSCH on the first resource, and the first terminal apparatus sends feedback information of the PSSCH on the second resource, the second resource may be considered as the resource corresponding to the first resource. The second resource may be determined based on a mapping relationship between the first resource and the second resource. For the mapping relationship between the first resource and the second resource, for example, a resource in which the PSSCH is received and a resource in which the feedback information of the PSSCH is sent, refer to an existing mapping relationship, or refer to a mapping relationship described in an aspect 1 in the following method 1400. This is not limited.

The first sidelink feedback information indicates the receiving status of the first sidelink data. This is not limited. The first sidelink feedback information may also indicate a conflict state. The following describes two situations.

In a first possible situation the first sidelink feedback information indicates the receiving status of the first sidelink data, or the first sidelink feedback information indicates a receiving state of the first sidelink data, that is, the first sidelink feedback information indicates whether the first terminal apparatus successfully receives the first sidelink data. For example, if the first terminal apparatus successfully receives and successfully decodes the first sidelink data, the first sidelink feedback information sent by the first terminal apparatus on the second resource is a positive acknowledgement, for example, an ACK; or if the first terminal apparatus does not receive the first sidelink data and/or fails to decode the first sidelink data, the first sidelink feedback information sent by the first terminal apparatus on the second resource is a negative acknowledgement, for example, a NACK. The first terminal apparatus may further determine the receiving state or the receiving status in a plurality of manners.

In a second possible situation, the first sidelink feedback information indicates that the state of the first sidelink data is a conflict state. The conflict state may indicate that a resource on which the first sidelink data is located conflicts with a resource on which another data is located, or indicate a half-duplex state of the first sidelink data, that is, the first terminal apparatus needs to send second sidelink data when receiving the first sidelink data. The half-duplex state may also be replaced with a half-duplex mode. It may be understood that, in this case, the first terminal apparatus may not correctly receive or may not receive the first sidelink data.

In the following embodiments, for ease of understanding, the first possible situation is mainly used as an example for description.

Optionally, the first terminal apparatus sends the first sidelink feedback information by using a COT resource shared by the second terminal apparatus. For example, if the first terminal apparatus receives the first sidelink data in a first COT on the first channel, the second terminal apparatus may share a resource of the first COT with the first terminal apparatus, so that the first terminal apparatus may send the first sidelink feedback information in the first COT. It may be understood that the foregoing is an example for description, and embodiments of this application are not limited thereto. For example, the first terminal apparatus may send the first sidelink feedback information by alternatively using a COT resource shared by another terminal apparatus. A manner of sharing a COT resource is not limited. For example, the second terminal apparatus and the first terminal apparatus share the resource of the first COT. For example, the second terminal apparatus may send indication information to the first terminal apparatus. The indication information indicates a resource that is in the first COT and that is used by the second terminal apparatus to send sidelink feedback information.

Based on the foregoing technical solution, a channel on which the first terminal apparatus receives sidelink data and a channel on which the first terminal apparatus sends sidelink feedback information corresponding to the sidelink data are the same, that is, a sidelink data resource and a corresponding sidelink feedback information resource are on a same channel. In this case, a sidelink feedback can be implemented, and the sidelink data resource and the corresponding sidelink feedback information resource are bundled, that is, the sidelink data resource and the corresponding sidelink feedback information resource are enabled to be on a same channel, thereby improving a probability of successfully feeding back sidelink feedback information. For example, the second terminal apparatus sends sidelink data to the first terminal apparatus in a COT of a channel #1. When there is COT sharing, for example, the second terminal apparatus and the first terminal apparatus share a COT resource of the channel #1, the first terminal apparatus can effectively use a current COT sharing opportunity to send sidelink feedback information, that is, send the sidelink feedback information in the COT of the channel #1, so that an LBT operation does not need to be performed on another channel, avoiding a case in which the sidelink feedback information cannot be sent in time because LBT fails to be performed on the another channel.

In the following, for ease of description and brevity, a PSFCH is used to represent sidelink feedback information, and a PSSCH is used to represent sidelink data. In other words, sending the PSFCH means sending the sidelink feedback information corresponding to the sidelink data on the PSFCH, and sending the PSSCH means sending the sidelink data on the PSSCH. A PSSCH resource represents a resource on which the PSSCH is located, a PSFCH resource represents a resource on which the PSFCH is located, a UE represents a terminal apparatus, a UE 1 represents the first terminal apparatus, and a UE 2 represents the second terminal apparatus. In addition, the following mainly uses an RB set for description. It may be understood that the RB set may also be replaced with a channel.

In the following embodiments, a PSFCH corresponding to the PSSCH represents a PSFCH used to feed back a receiving status or a conflict state of the PSSCH. Similarly, in the following embodiments, the PSSCH resource represents a resource for sending the PSSCH, and a corresponding PSFCH resource represents a resource of a PSFCH corresponding to the PSSCH, for example, a resource used to indicate feedback information of the PSSCH. Details are not described below again.

In this embodiment of this application, the PSFCH resource and the PSSCH resource are in a same RB set. The following describes two possible manners, to implement, as much as possible, that the PSFCH resource and the PSSCH resource are in a same RB set. A resource element described below may also be replaced with a frequency domain element, or may be replaced with a time domain element, or may be replaced with a time-frequency element. This is not limited.

Manner 1: A quantity of resource elements that are used to transmit the PSFCH in different RB sets in a resource pool is the same.

The resource pool represents an SL resource pool. For details, refer to the foregoing term explanation. Based on the manner 1, optionally, the method 1200 further includes: The UE, for example, the UE 1 and/or the UE 2, obtains configuration information of the resource pool. The resource pool includes at least one RB set, a quantity of resource elements that are used to send the PSFCH in each RB set is M, and M is an integer greater than 1. For example, the resource pool includes at least two RB sets, and a quantity of resource elements that are used to send the PSFCH in each RB set is M. The resource element may be, for example, a resource block. For details, refer to the foregoing term explanation.

The configuration information of the resource pool may indicate that a quantity of resource elements that are used to send the PSFCH in each RB set is M, that is, it may be learned, based on the configuration information of the resource pool, that the quantity of resource elements that are used to send the PSFCH in each RB set is M. A manner of determining a value of M is not limited. In a possible manner, it may be learned, by using a quantity of bits whose values are 1 in different RB sets in a bitmap in the resource pool, that the quantity of resource elements that are used to send the PSFCH in each RB set is M. In another possible manner, the configuration information carries indication information, and the indication information indicates the value of M.

The quantity of resource elements that are used to send the PSFCH in each RB set is M, and this indicates that a quantity of resource elements that can be used to send the PSFCH in each RB set is M. A specific resource element actually used by the terminal apparatus to send the PSFCH may be determined based on the existing mapping relationship between the PSSCH resource and the PSFCH resource or the mapping relationship described in the aspect 1 in the following method 1400. This is not limited.

Optionally, the first terminal apparatus determines the second resource based on the configuration information of the resource pool. For example, the first terminal apparatus may learn, based on the configuration information of the resource pool, a resource that can be used to send the PSFCH, and may determine, based on a mapping relationship between the first resource that is used to receive the first sidelink data and the resource that can be used to send the PSFCH, the second resource corresponding to the first resource.

For example, the second resource may be at least one of the M resource elements that are used to send the PSFCH on the first channel, for example, one PRB, or one or two symbols; or the second resource may include at least one of the M resource elements that are used to send the PSFCH on the first channel, and another resource. The another resource may be, for example, a common PSFCH resource. The public PSFCH resource is described later.

In this manner, when the PSSCH resource and the corresponding PSFCH resource are mapped at a resource pool granularity, because a quantity of resource elements that are used to transmit the PSFCH in different RB sets is the same, it can be ensured, as much as possible, that the PSSCH resource and the corresponding PSFCH resource are in a same RB set.

For example, the PSFCH resource is indicated by using the bitmap. That a quantity of resource elements that are used to transmit the PSFCH in different RB sets in a resource pool is the same may be replaced with: the quantity of bits whose values are 1 in different RB sets in the bitmap in the resource pool is the same.

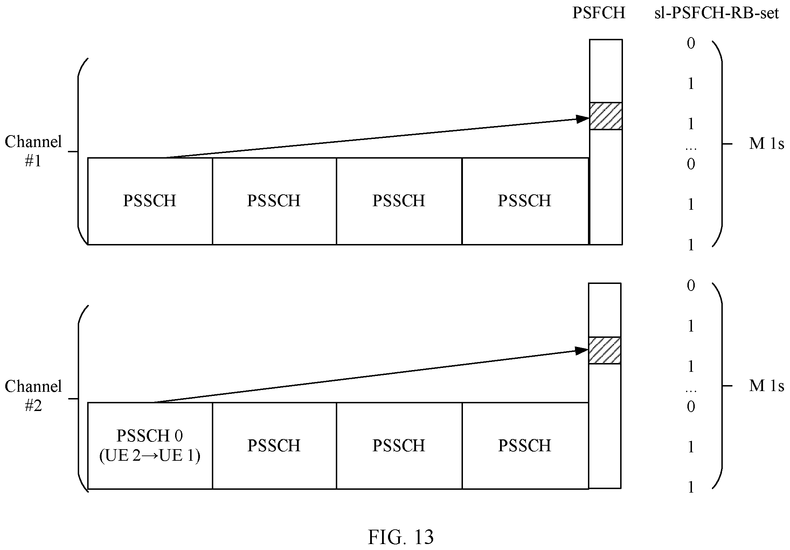

FIG. 13 is a diagram in which the PSFCH resource and the PSSCH resource are in a same RB set.

As shown in FIG. 13, an example in which the PSFCH resource is an HARQ feedback resource is used, that is, the PSFCH resource is used to indicate the receiving status of the PSSCH. "sl-PSFCH-RB-set" is used as an example. When a quantity of bits whose values are 1 in the bitmap represented by "sl-PSFCH-RB-set" in different RB sets in the resource pool is the same, as shown in FIG. 13, when the quantity of bits whose values are 1 in each RB set in the bitmap is M, in this case, the PSSCH resource and the corresponding PSFCH resource are in a same RB set. In this way, when there is COT sharing, for example, the UE 2 shares a COT resource on a channel #2 with the UE 1, the UE 1 can effectively use a current COT sharing opportunity to send an HARQ feedback of a PSSCH 0, so that an LBT operation does not need to be performed on another channel.

Optionally, resources that are used to transmit the PSFCH in the resource pool are at a same location in different RB sets in the resource pool, that is, frequency domain elements that are used to send the PSFCH in each RB set are at a same location. For example, resource blocks that are used to send the PSFCH in each RB set are at a same location.

In this way, a same quantity of frequency domain elements that are used to transmit the PSFCH in different RB sets in the SL resource pool can be implemented, so that the PSFCH resource and the PSSCH resource are in a same RB set.

For example, the PSFCH resource is indicated by using the bitmap. That resources that are used to transmit the PSFCH in the resource pool are at a same location in different RB sets in the resource pool may be replaced with: a location at which a bit value is 1 in different RB sets in the bitmap in the resource pool is the same. Based on this, a bitmap in another RB set may be considered as a copy of a bitmap on a specific RB set. In this way, the quantity of bits whose values are 1 in the bitmap of different RB sets in the resource pool may be the same, so that the PSFCH resource and the corresponding PSSCH resource are in a same RB set.

Manner 2: Map the PSSCH resource and the corresponding PSFCH resource based on an RB set granularity.

In this manner, the PSSCH resource and the corresponding PSFCH resource are mapped based on an RB set granularity. In this way, a PSSCH in each RB set is mapped to a PSFCH in a same RB set, so that the PSFCH resource and the PSSCH resource can be in a same RB set.

For example, it is assumed that there are two RB sets, and that a PSFCH resource is indicated by using a bitmap is used as an example. A quantity of bits whose values are 1 in an RB set #1 is 10, and a quantity of bits whose values are 1 in an RB set #2 is 20. If mapping is performed based on an RB set granularity, a PSFCH resource in the RB set #1 is used to transmit feedback information of a PSSCH in the RB set #1, and a quantity of RBs in the RB set #1 is 10. A PSFCH resource in the RB set #2 is used to transmit feedback information of a PSSCH in the RB set #2, and a quantity of RBs used to transmit a PSFCH in the RB set #2 is 20.

The foregoing manner 1 and manner 2 are examples for description. Embodiments of this application are not limited thereto, a variation belonging to the foregoing manner 1 or manner 2 is also applicable to embodiments of this application.

Optionally, if there is a common (common) PSFCH resource, the PSFCH may be transmitted on the resource.

The common PSFCH resource represents a PSFCH resource that can be used by a plurality of terminal apparatuses. For example, for a specific PSFCH resource, if the PSFCH resource is a common PSFCH resource, a plurality of terminal apparatuses may use the PSFCH resource, and the terminal apparatus may perform sending on the common PSFCH resource and a PSFCH resource corresponding to a PSSCH received by the terminal apparatus. In this way, regardless of whether LBT of the terminal apparatus succeeds, the common PSFCH resource may also be used to transmit a PSFCH, thereby improving feedback flexibility of the terminal apparatus. In addition, for an unlicensed frequency band, to access a 20 MHz channel, a requirement of at least a minimum occupied channel bandwidth (occupied channel bandwidth, OCB) needs to be satisfied before the channel can be occupied. Generally, the minimum OCB needs to be at least 80% of a normal bandwidth. 20 MHz is used as an example. The 20 MHz channel can be preempted only when at least a 16 Mhz bandwidth is occupied. Therefore, transmitting the PSFCH on the common PSFCH resource can improve feedback flexibility of the terminal apparatus, and comply with a related communication requirement.

Optionally, the PSFCH is not transmitted on a guard bandwidth (guard bandwidth) resource.

Considering that when the UE successfully performs LBT on only one LBT channel, a guard bandwidth resource on the LBT channel is unavailable. Therefore, when the SL resource pool includes a plurality of RB set resources, a location with a bit value of 1 in the bitmap may not include a guard bandwidth, that is, a PRB resource included in the guard bandwidth is not used to transmit the PSFCH. If an available PSFCH feedback resource is also configured for the guard bandwidth during system configuration, the PSFCH resource on the guard bandwidth becomes available or not as the guard bandwidth is available or not. That is, if the guard bandwidth resource is unavailable, even if an available PSFCH resource is configured for the guard bandwidth, the PSFCH is not sent on the guard bandwidth.

The foregoing is an example for description, and embodiments are not limited thereto. For example, the UE may also transmit the PSFCH on the guard bandwidth resource. For example, if it is predefined, for example, predefined in a standard, that a guard bandwidth resource may be used to transmit a PSFCH, if an available PSFCH resource is configured for the guard bandwidth, even if the UE successfully performs LBT on an RB set, the guard bandwidth resource in this case may also be used to transmit the PSFCH.

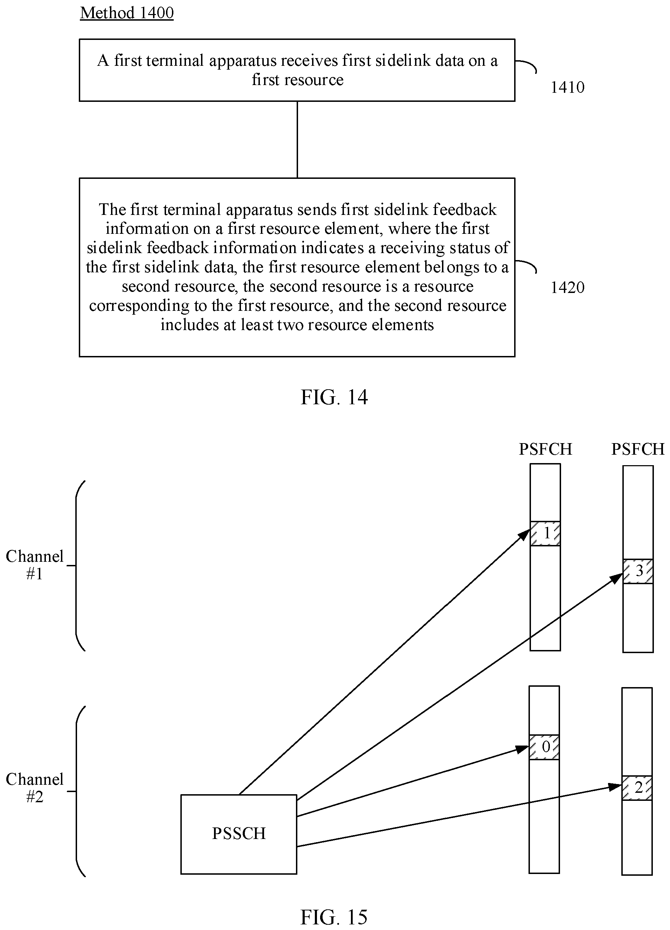

FIG. 14 is a diagram of a communication method 1400 according to another embodiment of this application. The method 1400 may include the following steps.

1410: A first terminal apparatus receives first sidelink data on a first resource.

1420: The first terminal apparatus sends first sidelink feedback information on a first resource element, where the first sidelink feedback information indicates a receiving status of the first sidelink data, the first resource element belongs to a second resource, the second resource is a resource corresponding to the first resource, and the second resource includes at least two resource elements.

For the first sidelink data, the first sidelink feedback information, and the second resource that is a resource corresponding to the first resource, refer to the description in the method 1200.

The resource element represents a resource element for sending sidelink feedback information. The resource element may also be replaced with a time-frequency element, or may be replaced with a time domain element, or may be replaced with a frequency domain element. In time domain, the resource element may include one or more time domain elements. In frequency domain, the resource element may include one or more frequency domain elements. For the time domain element and the frequency domain element, refer to the foregoing term explanations.

In this embodiment of this application, the second resource includes at least two resource elements, and the at least two resource elements are resource elements that are used to send the first sidelink feedback information. The second resource may be considered as a candidate resource that is used to send the sidelink feedback information. The second resource includes at least two resource elements, and it may be considered that there are at least two candidate resources that are used to send sidelink feedback information. The first resource element included in the second resource represents a resource element that actually sends sidelink feedback information.

In step 1420, the first terminal apparatus sends the first sidelink feedback information on the second resource, which does not constitute a limitation on the fact that the first terminal apparatus sends the first sidelink feedback information on all resource elements on the second resource. For example, the first terminal apparatus may send the first sidelink feedback information on all resource elements on the second resource, or the first terminal apparatus may send the first sidelink feedback information on some resource elements on the second resource, or the first terminal apparatus may send the first sidelink feedback information on a specific resource element on the second resource. A resource element for sending the first sidelink feedback information is described below with reference to an aspect 3.

Based on the foregoing technical solution, a plurality of sidelink feedback information resources are introduced. To be specific, one sidelink data resource may correspond to a plurality of sidelink feedback information resources, and the plurality of sidelink feedback information resources may also be referred to as candidate sidelink feedback information resources. In this way, an opportunity of successfully transmitting sidelink feedback information can be increased. For example, if one piece of sidelink data corresponds to one sidelink feedback information resource, the terminal apparatus cannot transmit sidelink feedback information after failing to perform LBT on a channel on which the sidelink feedback information resource is located. On the contrary, if one piece of sidelink data corresponds to a plurality of sidelink feedback information resources, the terminal apparatus may perform LBT at a plurality of locations. In other words, the terminal apparatus may perform LBT on a channel on which each of the plurality of sidelink feedback information resources is located. The terminal apparatus can send sidelink feedback information provided that LBT is successfully performed on a channel on which any one of the plurality of sidelink feedback information resources is located, thereby increasing an opportunity of successfully transmitting the sidelink feedback information.

In the following, for ease of description and brevity, a PSFCH is used to represent sidelink feedback information, a PSSCH represents sidelink data, a PSSCH resource represents a resource on which the PSSCH is located, a PSFCH resource represents a resource on which the PSFCH is located, a UE represents a terminal apparatus, a UE 1 represents the first terminal apparatus, and a UE 2 represents a second terminal apparatus. In addition, the following mainly uses an RB set for description. It may be understood that the RB set may also be replaced with a channel.

Optionally, the at least two resource elements are located in at least one of the following: different time domain locations, different frequency domain locations, and different code domain resources. In this embodiment of this application, different time domain resources and different frequency domain resources are mainly used as an example for description. Different time domain locations may represent different time domain elements, and different frequency domain locations may represent different frequency domain elements. Based on this, one PSSCH resource may correspond to Q PSFCH resources at a same time domain location, and/or one PSSCH resource may further correspond to G PSFCH resource elements in G time domain elements, where both Q and G are integers greater than or equal to 1. For example, the Q PSFCH resources are located at different frequency domain locations (Q>1). One PSSCH resource may correspond to Q PSFCH resources at a same time domain location, and one PSSCH resource may further correspond to G PSFCH resource elements (G≥1) in G time domain elements. In this case, one PSSCH resource corresponds to Q×G PSFCH feedback resources. In order to increase an opportunity of a successful PSFCH feedback, the Q PSFCH resources at a same time domain location should be located in different RB sets. Herein, $Q \le Q_{RP}$, and $Q_{RP}$ represents a total quantity of RB sets in a resource pool. In addition, a time difference between the G PSFCH resources and a PSSCH resource corresponding to the G PSFCH resources is within a specified feedback valid time, or within a timer time. For example, to ensure validity of PSFCH transmission, G=1.

FIG. 15 is a diagram in which one PSSCH corresponds to a plurality of PSFCH resources.

As shown in FIG. 15, one PSSCH resource corresponds to two PSFCH resources in two RB sets in a same slot and two PSFCH resources in a same RB set in different slots, that is, in this case, Q=G=2. For example, one PSSCH resource corresponds to four PSFCH resources, that is, Q×G=2×2=4.

The following describes a related solution in which one PSSCH resource corresponds to a plurality of PSFCH resources from several aspects.

According to an aspect 1, a mapping relationship is described when one PSSCH resource corresponds to a plurality of PSFCH resources.

The following provides an example to describe a mapping manner between a PSSCH and a PSFCH.

The PSFCH resource may be a periodic resource. It is assumed that a periodic parameter is $N_{PSSCH}^{PSFCH}$. For example, a value of $N_{PSSCH}^{PSFCH}$ may be 0, 1, 2, or 4. When a plurality of PSFCH resources are introduced, mapping between the PSSCH and the PSFCH may be implemented through the following steps.

The following provides two specific determining steps with reference to two cases.

Case 1

Step 1: Determine a PSFCH resource in the resource pool.

A bitmap of a PSFCH frequency domain resource is configured by using the resource pool, and the bitmap indicates whether a PRB on a frequency domain resource in which the resource pool is located can be used as a PSFCH resource.

A length of bit information included in the bitmap is equal to a quantity of PRBs in the resource pool. A PRB corresponding to a bit value of 1 in the bitmap may be used to transmit a PSFCH, and a PRB corresponding to a bit value of 0 in the bitmap cannot be used to transmit a PSFCH. A parameter $M_{PRB,set}^{PSFCH}$ represents a quantity of PRBs that are used to transmit the PSFCH, that is, a quantity of bits whose values are 1 in the bitmap.

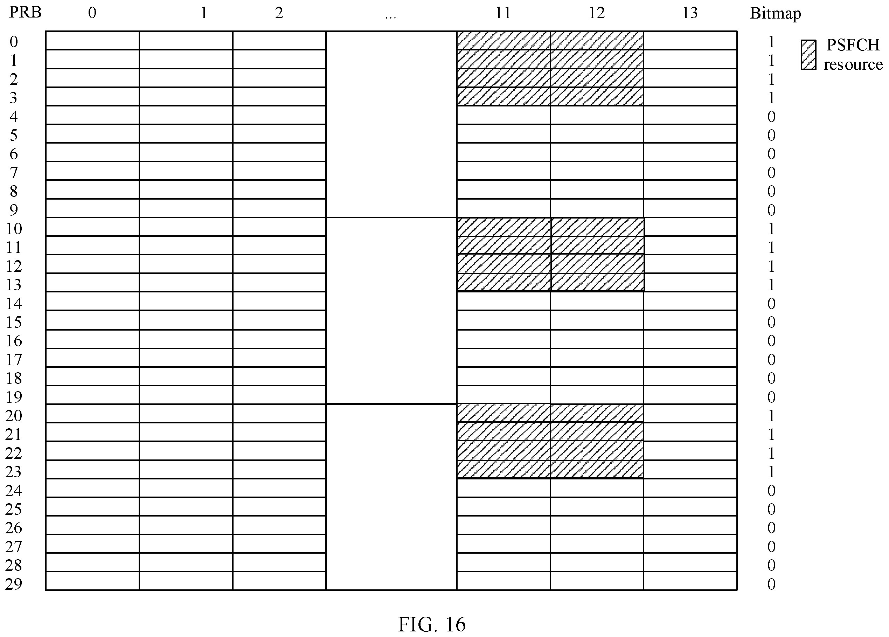

FIG. 16 is a diagram of indicating a PSFCH resource by a bitmap.

As shown in FIG. 16, assuming that one subchannel includes 10 PRBs, and the resource pool includes three subchannels in total, a bitmap indicating a PSFCH frequency domain resource in the resource pool includes 3×10=30 bits in total, to indicate whether each PRB can be used to transmit a PSFCH. The example shown in FIG. 16 is used as an example. The bitmap indicates that first four PRBs of each subchannel may be used to transmit a PSFCH, and the bitmap may be used to indicate an HARQ-ACK resource, or may be used to indicate a scheme 2 conflict resource.

Step 2: Determine a PSFCH resource on each RB set.

It is assumed that one PSSCH resource corresponds to Q PSFCH resources in different RB sets in a same slot in a resource pool, and feeding back may be performed in G slots, that is, one PSSCH resource corresponds to Q×G PSFCH feedback resources. When Q>1, that is, one PSSCH corresponds to a plurality of PSFCH resources in a same slot, optionally, the plurality of PSFCH resources corresponding to one PSSCH resource may be located in different RB sets or LBT channels. To ensure that each PSFCH resource element corresponds to different PSSCH transmission, all PSFCH frequency domain resources that can be used for transmission in a specific time element in the resource pool may be divided into Q×G parts. For example, a quantity of PSFCH resources available for single mapping in every $N_{PSSCH}^{PSFCH}$ PSSCH slots is: $M_{PRB,\sin gle,l}^{PSFCH} = M_{PRB,set}^{PSFCH}/(Q \cdot G)$. Herein, $M_{PRB,\sin gle,l}^{PSFCH}$ may mean dividing $M_{PRB,set}^{PSFCH}$ resources into blocks, or may mean dividing at a specific gap. PRB numbers in $M_{PRB,\sin gle,l}^{PSFCH}$ may be re-numbered in ascending order according to $M_{PRB,set}^{PSFCH}$ PRB numbers, that is *l* = 0,...,*Q·G*-1.

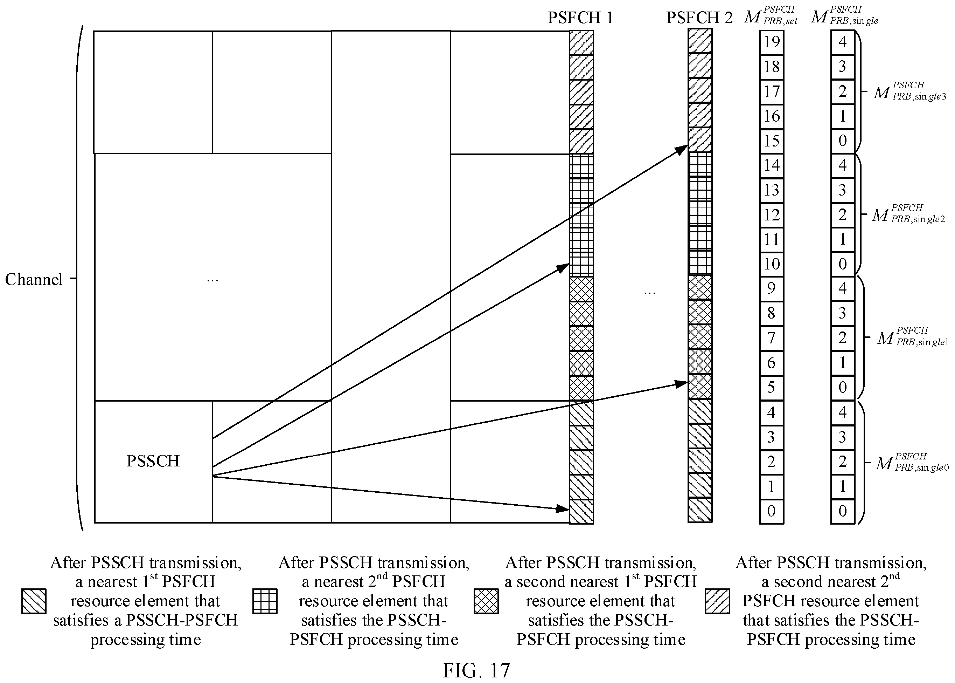

FIG. 17 is a diagram of PSFCH resource division.

As shown in FIG. 17, when Q=2 and G=2, all PSFCH resources in the resource pool may be divided into four equal parts, and $M_{PRB,\sin gle,l}^{PSFCH}$ and $M_{PRB,set}^{PSFCH}$ in the figure show only numbers of grids shown in the figure, which is an example. That is, PRB numbers may be numbered according to gains similar to grids, and the PRB numbers do not represent real PRB index numbers.

For example, a quantity of bits whose values are 1 in each RB set in the bitmap is the same. Because every $N_{PSSCH}^{PSFCH}$ PSSCH slots correspond to one PSFCH slot, for a resource pool including $N_{subch}$ subchannels, a quantity of PSFCH resources corresponding to each subchannel mapped once is:

$$M^{PSFCH}_{subch,slot} = M^{PSFCH}_{PRB,\sin gle,l} \Big/ \left( N_{subch} \cdot N^{PSFCH}_{PSSCH} \right)$$ . For meanings of the parameters, refer to the foregoing term explanations. Details are not described herein again.

Step 3: Sequentially allocate PSFCH available resources in a PSFCH feedback slot to each subchannel in a feedback period in a time-domain followed by frequency-domain manner. In other words, a PSFCH resource is mapped to a corresponding subchannel through step 3.

For an $i^{th}$ slot in $N^{PSFCH}_{PSSCH}$ bundled PSSCH slots, if a frequency domain subchannel number in a resource pool of the $i^{th}$ slot is j, a PSFCH resource corresponding to the $i^{th}$ slot at a specific time is:

$$\left[ \left( i + j \cdot N^{PSFCH}_{PSSCH} \right) \cdot M^{PSFCH}_{subch,slot}, \left( i + 1 + j \cdot N^{PSFCH}_{PSSCH} \right) \cdot M^{PSFCH}_{subch,slot} - 1 \right].$$

Based on one time of mapping, another corresponding PSFCH resource is determined on different $M^{PSFCH}_{PRB,\sin gle,l}$ according to the foregoing corresponding PRB number. For example, as shown in FIG. 17, when the PSSCH obtains, according to the foregoing steps 1 to 3, that a corresponding PSFCH resource on $M^{PSFCH}_{PRB,\sin gle,0}$ is a resource of a PRB(s) numbered 0, a PSFCH resource corresponding to the PSSCH on other $M^{PSFCH}_{PRB,\sin gle,l}$ is also a PRB(s) resource numbered 0.

To ensure that different frequency domain locations in a same time element are located in different RB sets or LBT channels, during mapping, it can be ensured that $M^{PSFCH}_{PRB,\sin gle,l}$ mapped at different frequency domain locations in a same time element are located to different RB sets or LBT channels.

For example, when one PSSCH has a mapping relationship in a plurality of slots, allocation of $M^{PSFCH}_{PRB,\sin gle,l}$ may be performed sequentially in ascending order based on a time gap of PSSCH-PSFCH mapping and then in ascending order base based on frequency domain, that is, perform allocation sequentially according to $M^{PSFCH}_{PRB,\sin gle,(g+q\cdot G)}$ . In a manner of performing allocation sequentially in ascending order based on the time gap of PSSCH-PSFCH mapping and then in ascending order based on frequency domain, this may comply with an existing protocol, and a small change is made to the protocol. In addition, the foregoing manner is an example for description, and this is not limited. For example, allocation may be performed sequentially in ascending order based on frequency domain of PSSCH-PSFCH mapping and then in ascending order based on the time gap.

Herein, $l = (g + q \cdot G)$, where q=0, ..., Q-1, and g=0, ..., G-1. An ascending order of g indicates an ascending order of a time element gap difference in which PSSCH-PSFCH is located. To be specific, for the $i^{th}$ slot in the $N^{PSFCH}_{PSSCH}$ bundled PSSCH slots, a slot number of the slot in the resource pool or the COT is n. If a frequency domain subchannel number in the resource pool is j, subchannel numbers corresponding to G slots may be mapped to PSFCH resources corresponding to G RB sets. For example, the subchannel numbers corresponding to the G slots may be sequentially mapped to the PSFCH resources corresponding to the G RB sets, that is, the subchannel numbers corresponding to an

$$\left( n, n + N^{PSFCH}_{PSSCH}, ..., n + (G-1) \cdot N^{PSFCH}_{PSSCH} \right)^{th}$$ slot are sequentially mapped to

$$\left( M^{PSFCH}_{PRB,\sin gle,0}, M^{PSFCH}_{PRB,\sin gle,1}, ..., M^{PSFCH}_{PRB,\sin gle,G-1} \right).$$

FIG. 17 is used as an example. When one PSSCH has a mapping relationship in two slots, $M^{PSFCH}_{PRB,\sin gle,0}$ , $M^{PSFCH}_{PRB,\sin gle,1}$ , $M^{PSFCH}_{PRB,\sin gle,2}$ , and $M^{PSFCH}_{PRB,\sin gle,3}$ are used for mapping of the same PSSCH in different slots.

Step 4: Determine a PSFCH resource element corresponding to one PSSCH. That is, a PSFCH resource index corresponding to the PSSCH is determined through step 4.

If one PSSCH occupies $N^{PSSCH}_{subch}$ subchannels, the PSSCH corresponds to $N^{PSSCH}_{subch} \cdot M^{PSFCH}_{subch,slot} \cdot N^{PSFCH}_{CS}$

$$R_{PRB,CS}^{PSFCH} = N_{subch}^{PSSCH} \cdot M_{subch,slot}^{PSFCH} \cdot N_{CS}^{PSFCH}$$

PSFCH resources, that is, .

Herein, $N_{CS}^{PSFCH}$ represents a quantity of PSFCH sequence pairs that can be multiplexed on one PRB used for sending a PSFCH. $M_{subch,slot}^{PSFCH}$ represents a quantity of PRBs of a PSFCH resource allocated to each subchannel.

As described above, the resource pool may also limit, by configuring $N_{type}^{PSFCH}$, the PSFCH resource available to the UE receiving the PSSCH.

In a possible situation, $N_{type}^{PSFCH} = 1$. In this situation, the UE receiving the PSSCH uses a PSFCH resource on a subchannel corresponding to the UE, for example, uses a PSFCH resource on a 1st subchannel corresponding to the UE, that is, $R_{PRB,CS}^{PSFCH} = M_{subch,slot}^{PSFCH} \cdot N_{CS}^{PSFCH}$. As shown in FIG. 9, when the PSSCH occupies two subchannels numbered 5 and 9 to transmit data, if $N_{type}^{PSFCH} = 1$, the UE receiving the PSSCH sends the PSFCH by using the PSFCH resource numbered 5, to feed back a receiving state of the PSSCH.

In another possible situation, $N_{type}^{PSFCH} = N_{subch}^{PSSCH}$. In this situation, the UE receiving the PSSCH may use PSFCH resources on all its corresponding subchannels, that is, $R_{PRB,CS}^{PSFCH} = N_{subch}^{PSSCH} \cdot M_{subch,slot}^{PSFCH} \cdot N_{CS}^{PSFCH}$. As shown in FIG. 9, when the PSSCH occupies two subchannels numbered 5 and 9 to transmit data, if $N_{type}^{PSFCH} = N_{subch}^{PSSCH}$, the UE receiving the PSSCH may send the PSFCH by using the PSFCH resources numbered 5 and 9, to feed back a receiving state of the PSSCH.

The following describes a solution for determining the PSFCH resource index corresponding to the PSSCH. Meanings of parameters in the following formulas are described as follows. $P_{ID}$ represents a physical layer source address ID carried in control information. $M_{ID}$ represents an ID indicated by a higher layer for the first sidelink data of the first terminal apparatus during multicast transmission. For a multicast 2, $M_{ID}$ is an ID configured for current PSSCH information transfer by a higher layer of each UE receiving a PSSCH, that is, an ID indicated by the higher layer for the first sidelink data of the first terminal apparatus when a value of a cast type indicator field (cast type indicator field) is 01; otherwise, $M_{ID} = 0$. g $\in \{0,1,...,G\text{-}1\}$, where G represents a quantity of resource elements in a same RB set in different time domain in the at least two resource elements. $q \in \{0,1,\cdots,Q\text{-}1\}$, where Q represents a quantity of resource elements in different RB sets in same time domain in the at least two resource elements, and L is a positive integer. For example, L may be considered as equal division of $R_{PRB,CS}^{PSFCH}$, for example, a value of L is 1.

Optionally, the PSFCH resource index satisfies the following formula:

$$\left( P_{ID} + M_{ID} + \Delta 1 \right) \bmod \left( floor \left( \frac{R_{PRB,CS}^{PSFCH}}{L} \right) \right) + \Delta 2$$

. Herein, Δ1 and Δ2 represent resource element index offsets, the resource element index offsets are related to a resource mapping locations, and Δ1 and Δ2 are integers greater than 0 or equal to 0. Optionally, L=1, or L=Q, or L=G, or L=Q×G. In addition, optionally, the formula

$$\left( P_{ID} + M_{ID} + \Delta 1 \right) \bmod \left( floor \left( \frac{R_{PRB,CS}^{PSFCH}}{L} \right) \right) + \Delta 2$$

may also be changed to:

$$\left( P_{ID} + M_{ID} + \Delta 1 \right) \bmod \left( \frac{R_{PRB,CS}^{PSFCH}}{L} \right) + \Delta 2$$

, that is, floor(A/B) and (A/B) have a same meaning or value, and details are not described in the following.

The following describes several possible solutions.

Solution 1: The PSFCH resource index satisfies Formula 1, and a PRB index of the PSFCH satisfies Formula 2.

$$\left(P_{ID}+M_{ID}+q\times G+g\right)\bmod R_{PRB,CS}^{PSFCH}$$

<div align="right">Formula 1</div>

$$\left(\left(P_{ID}+M_{ID}+q\times G+g\right)\bmod R_{PRB,CS}^{PSFCH}\right)\bmod\left(R_{PRB,CS}^{PSFCH}\Big/\left(N_{CS}^{PSFCH}\times N_{type}^{PSFCH}\right)\right)$$

<div align="right">Formula 2</div>

Solution 2: The PSFCH resource index satisfies Formula 3, and the PRB index of the PSFCH satisfies Formula 4.

$$\left(P_{ID}+M_{ID}+g\times Q+q\right)\bmod R_{PRB,CS}^{PSFCH}$$

<div align="right">Formula 3</div>

$$\left(\left(P_{ID}+M_{ID}+g\times Q+q\right)\bmod R_{PRB,CS}^{PSFCH}\right)\bmod\left(R_{PRB,CS}^{PSFCH}\Big/\left(N_{CS}^{PSFCH}\times N_{type}^{PSFCH}\right)\right)$$

<div align="right">Formula 4</div>

Solution 3: The PSFCH resource index satisfies Formula 5, and the PRB index of the PSFCH satisfies Formula 6.

$$\left(P_{ID}+M_{ID}\right)\bmod\left(floor\left(\frac{R_{PRB,CS}^{PSFCH}}{Q*G}\right)\right)+q\times floor\left(\frac{R_{PRB,CS}^{PSFCH}}{Q}\right)+g$$

<div align="right">Formula 5</div>

$$\left(\left(P_{ID}+M_{ID}\right)\bmod\left(floor\left(\frac{R_{PRB,CS}^{PSFCH}}{Q*G}\right)\right)+q\times floor\left(\frac{R_{PRB,CS}^{PSFCH}}{Q}\right)+g\right)\bmod\left(R_{PRB,CS}^{PSFCH}\Big/\left(N_{CS}^{PSFCH}\times N_{type}^{PSFCH}\right)\right)$$

<div align="right">Formula 6</div>

Solution 4: The PSFCH resource index satisfies Formula 7, and the PRB index of the PSFCH satisfies Formula 8.

$$\left(P_{ID}+M_{ID}\right)\bmod\left(floor\left(\frac{R_{PRB,CS}^{PSFCH}}{Q*G}\right)\right)+g\times floor\left(\frac{R_{PRB,CS}^{PSFCH}}{Q}\right)+q$$

<div align="right">Formula 7</div>

$$\left(\left(P_{ID}+M_{ID}\right)\bmod\left(floor\left(\frac{R_{PRB,CS}^{PSFCH}}{Q\times G}\right)\right)+g\times floor\left(\frac{R_{PRB,CS}^{PSFCH}}{Q}\right)+q\right)\bmod\left(R_{PRB,CS}^{PSFCH}\Big/\left(N_{CS}^{PSFCH}\times N_{type}^{PSFCH}\right)\right)$$

<div align="right">Formula 8</div>

Solution 5: The PSFCH resource index satisfies Formula 9, and the PRB index of the PSFCH satisfies Formula 10.

$$\left(P_{ID}+M_{ID}\right)\bmod R_{PRB,CS}^{PSFCH}$$

<div align="right">Formula 9</div>

$$\left(\left(P_{ID}+M_{ID}\right)\bmod R_{PRB,CS}^{PSFCH}\right)\bmod\left(R_{PRB,CS}^{PSFCH}\Big/\left(N_{CS}^{PSFCH}\times N_{type}^{PSFCH}\right)\right)$$

Formula 10

It may be understood that the formulas used in the solution 1 to the solution 5 are examples for description, and do not constitute a limitation on the protection scope of embodiments of this application. In a process in which the foregoing parameters are calculated, calculation may be performed according to the foregoing formulas, calculation may be performed based on variations of the foregoing formulas, or calculation may be performed in another manner, to satisfy a calculation result of the formulas. For example, Formula 1 or Formula 3 may also be changed:

$$\left(P_{ID}+M_{ID}+\Delta\right)\bmod R_{PRB,CS}^{PSFCH}$$ . Herein, $\Delta$ may include a parameter related to a quantity of mapping times, for example, may represent an index offset related to a PSFCH mapping location. $\Delta$=0 represents that there is no relative offset of the index.

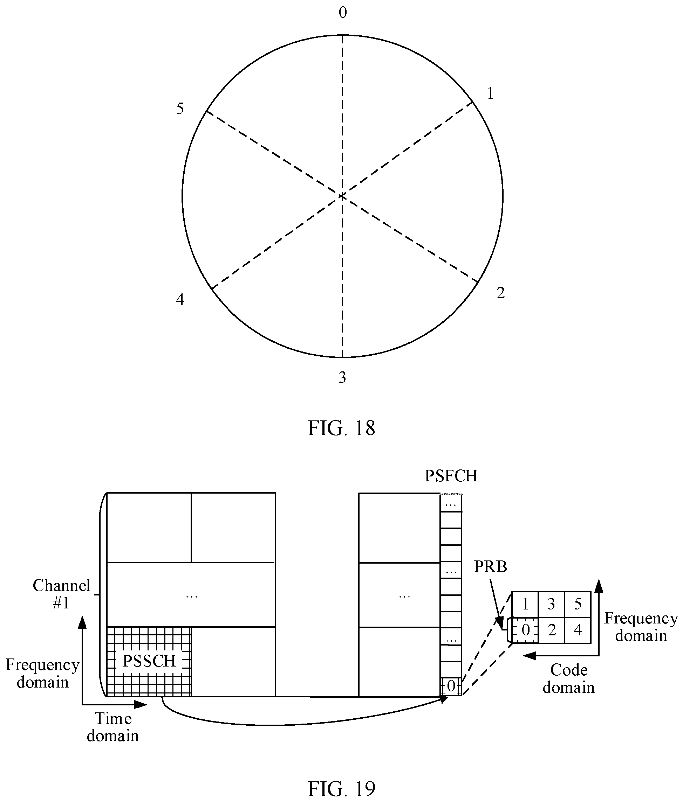

FIG. 18 is a diagram of a PSFCH sequence pair.

As shown in FIG. 18, when $N_{CS}^{PSFCH}=3$ , there are three PSFCH sequence pairs, for example, a (0, 3) sequence pair, a (1, 4) sequence pair, and a (2, 5) sequence pair. Different numbers indicate different phase offsets. For example, a phase difference between the number 0 and the number 1 is 60 degrees. According to the foregoing step 4, a PSFCH resource element corresponding to one PSSCH is calculated.

FIG. 19 is a diagram of frequency division and code division resources corresponding to PSSCH-PSFCH.

As shown in FIG. 19, assuming that $N_{CS}^{PSFCH}=3$ and $M_{subch,slot}^{PSFCH}=2$ , a PSFCH resource element corresponding to a PSSCH on a subchannel is $N_{CS}^{PSFCH}\times M_{subch,slot}^{PSFCH}=6$ . These PSFCH resource elements are numbered {0, 1, 2, 3, 4, 5} in code domain ascending order and then in frequency domain ascending order. The solution 1 is used as an example. According to the mapping relationship shown in solution 1, when a subchannel on which one piece of PSSCH transmission is located corresponds to two different PSFCH resources, different PSFCH resource elements corresponding to the PSSCH transmission may be different. For example, a number of a 1st PSFCH resource element is 0, and a number of the other PSFCH resource element is 1.

A difference between the solution 3 and the solution 1 lies in that, in the solution 1, corresponding PSFCH resource elements are allocated to a same PSSCH resource at a specific gap, where the gap may be equal to G or Q; and in the solution 3, grouping is performed based on PSFCH resource element numbers, and then PSFCH resource elements corresponding to the same PSSCH resource are allocated at the grouping gap, that is, all PSFCH resource elements in a same group correspond to a same PSFCH resource number. For example, when one PSSCH corresponds to two different PSFCH resources in a same slot, that is, Q=2, according to the solution 3, when different PSFCH resource elements in a same slot corresponding to one PSSCH are allocated according to a gap equal to Q, PSFCH resource element numbers corresponding to the two PSFCH resource elements may be 0 and 2. A difference between the solution 4 and the solution 2 is similar, and details are not described again.

Case 2

Step 1: Determine a PSFCH resource in the resource pool.

For step 1 in the case 2, refer to step 1 in the case 1. Details are not described herein again.

Step 2: Determine the PSFCH resource.

Descriptions are provided with two situations.

Situation A: Mapping is performed at a resource pool granularity.

It is assumed that one PSSCH resource corresponds to Q PSFCH resources at different frequency domain locations in a same slot in the resource pool, and feeding back may be performed in G slots, that is, one PSSCH resource corresponds to Q×G PSFCH feedback resources. When Q>1, that is, one PSSCH corresponds to a plurality of PSFCH resources in a same slot, optionally, the plurality of PSFCH resources corresponding to one PSSCH resource may be located in different RB sets or LBT channels. To ensure that PSFCH resources corresponding to a same PSSCH are in different RB sets in a same slot, all PSFCH resources available for transmission in the resource pool may be divided into Q parts. For example, a quantity of PSFCH resources available for single mapping in every $N_{PSSCH}^{PSFCH}$ PSSCH slots is:

$$M_{PRB,\sin gle,l}^{PSFCH}=M_{PRB,set}^{PSFCH}\Big/\left(Q\right)$$ . Herein, $M_{PRB,\sin gle,l}^{PSFCH}$ may mean dividing $M_{PRB,set}^{PSFCH}$ resources into blocks, or may mean dividing at a specific gap. PRB numbers in $M_{PRB,\sin gle,l}^{PSFCH}$ maybe re-numbered in ascending order according to PRB numbers corresponding to $M_{PRB,set}^{PSFCH}$, that is $l = 0,...,Q$ -1.

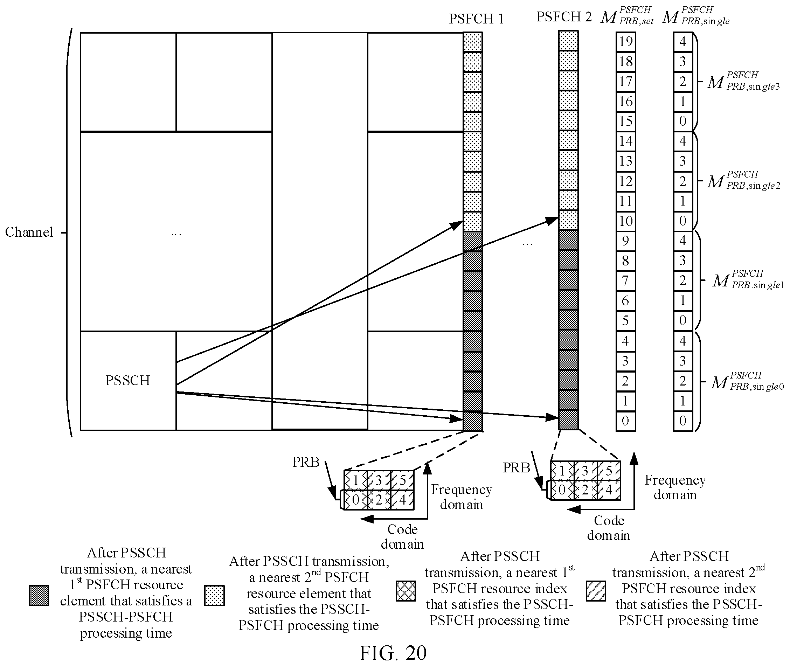

FIG. 20 is another diagram of PSFCH resource division.

As shown in FIG. 20, when Q=2 and G=2, all PSFCH resources in the resource pool may be divided into two equal parts. $M_{PRB,\sin gle,l}^{PSFCH}$ and $M_{PRB,set}^{PSFCH}$ in the figure show only numbers of grids shown in the figure, which is an example. That is, PRB numbers may be numbered according to gains similar to grids, and the PRB numbers do not represent real PRB index numbers.

For example, when a plurality of PSSCH resources are mapped to a same PSFCH resource, to distinguish resource conflicts caused by the plurality of PSFCH resources from different PSSCHs, resource elements in frequency domain and code domain may be divided again, for example, evenly divided into G parts, as shown in an example in frequency domain and code domain in FIG. 20.

For example, a quantity of bits whose values are 1 in each RB set in the bitmap is the same. Because every $N_{PSSCH}^{PSFCH}$ PSSCH slots correspond to one PSFCH slot, for a resource pool including $N_{subch}$ subchannels, a quantity of PSFCH resources corresponding to each subchannel mapped once is:

$$M_{subch,slot}^{PSFCH} = M_{PRB,\sin gle,l}^{PSFCH}\Big/\left(N_{subch} \cdot N_{PSSCH}^{PSFCH}\right)$$

. For meanings of the parameters, refer to the foregoing term explanations. Details are not described herein again.

Situation B: Mapping is performed at an RB set granularity.

When internal RB set mapping is used, $M_{PRB,\sin gle,l}^{PSFCH}$ represents a quantity of available PSFCH resources in each RB set, that is, a quantity of bits whose values are 1 in each RB set in the bitmap. In this case, $l$ indicates an RB set number in the resource pool. Other situations are similar to the situation A, and details are not described herein again.

In addition, because mapping is performed at the RB set granularity, a quantity of available PSFCH resources on each RB set may be different. Therefore, Q RB sets may be selected in sequence to repeat step 2 to step 4, and mapping and encoding are performed again based on a corresponding $q^{th}$ candidate location. If a quantity of available PSFCH resources in each RB set is the same, index mapping in step 4 may be performed. After the index mapping is completed, an index location of a PRB in which an actually transmitted PSFCH resource is located is obtained based on bitmap mapping.

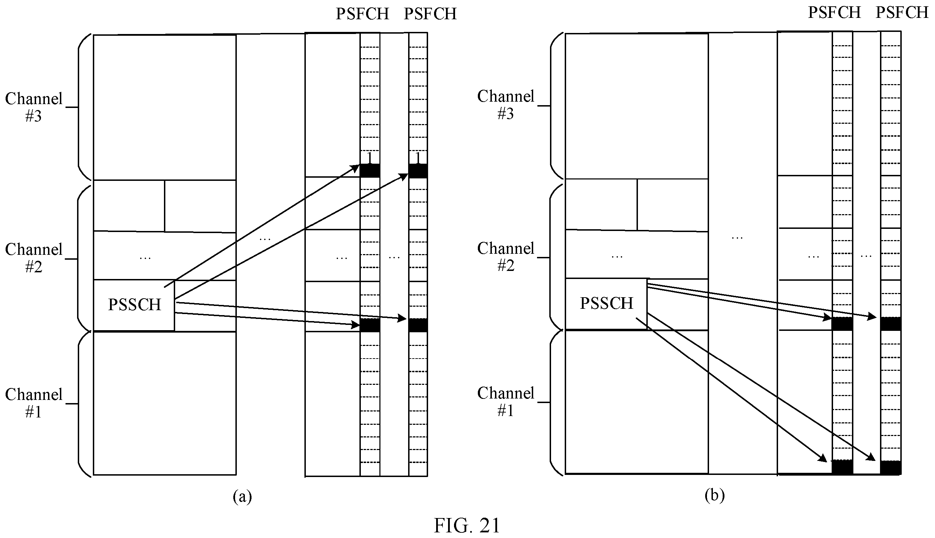

FIG. 21 is a diagram in which one PSSCH corresponds to a plurality of PSFCH feedbacks in different directions.

When upward mapping is performed, for example, $q'=(q+1)mod(Q_{RP})$. As shown in (a) of FIG. 21, one PSSCH resource corresponds to two RB set resources in a same slot. Specifically, when upward mapping is performed, a PSFCH resource corresponding to a PSSCH on a channel #2 includes one PRB resource on the channel #2 and one PRB resource on a channel #3.

When downward mapping is performed, for example, $q'=(q-1+Q_{RP})mod(Q_{RP})$. As shown in (b) of FIG. 21, one PSSCH resource corresponds to two RB set resources in a same slot. Specifically, downward mapping is performed, a PSFCH resource corresponding to the PSSCH on the channel #2 includes one PRB resource on the channel #2 and one PRB resource on a channel #1.

It may be understood that, the foregoing is an example for description, and this is not limited. For example, mapping may be performed at a specific gap when upward mapping is performed. For another example, mapping may be performed at a specific gap when downward mapping is performed. For example, assuming that there are y RB sets between two adj acent PSFCH resources, there are y RB set locations between two adjacent PSFCH resources in an upward or downward order. If y is 0, mapping is sequentially performed on PSFCH resources in two adjacent RB sets, as shown in FIG. 21.

It may be further understood that when one PSSCH corresponds to a plurality of PSFCH resources in different RB sets, PRB indexes actually corresponding to the PSSCH are not necessarily fixed, but are related to bit values in the bitmap. (a) of FIG. 21 is used as an example. A 1st available PSFCH resource on the channel #3 in (a) of FIG. 21 may start from a grid numbered 1. In this case, a black box should be moved to the location 1. In addition, a candidate PSFCH resource corresponding to one PSSCH resource is numbered in ascending order in frequency domain first and then in ascending order in time domain based on a mapping direction, as shown in FIG. 15.

Step 3: Sequentially allocate PSFCH available resources in a PSFCH feedback slot to each subchannel in a feedback period in a time-domain followed by frequency-domain manner. In other words, a PSFCH resource is mapped to a corresponding subchannel through step 3.

Step 3 in the case 2 is similar to step 3 in the case 1. A PSFCH resource to which PSSCH transmission is mapped to $M_{PRB,\sin gle,l}^{PSFCH}$ in one piece of mapping is found according to the foregoing steps. Details are not described herein again.

Step 4: Determine a PSFCH resource corresponding to one PSSCH. That is, a PSFCH resource index corresponding to the PSSCH is determined through step 4.

Step 4 in the case 2 is similar to step 4 in the case 1, and the PSFCH resource index satisfies the following formula:

$$\left(P_{ID}+M_{ID}+\Delta 1\right)\mathrm{mod}\left(floor\left(\frac{R_{PRB,CS}^{PSFCH}}{L}\right)\right)+\Delta 2$$

. In addition, in addition to the foregoing formula, in the case 2, the PSFCH resource index may further satisfy a formula: $(P_{ID}+M_{ID}+\Delta 1)\mathrm{mod}(R/G)+\Delta 2$. For example, the PSFCH resource index satisfies Formula 11, and the PRB index of the PSFCH satisfies Formula 12.

$$\left(P_{ID}+M_{ID}+g\right)\mathrm{mod}\left(floor\left(\frac{R_{PRB,CS}^{PSFCH}}{G}\right)\right)+g\times floor\left(\frac{R_{PRB,CS}^{PSFCH}}{G}\right)$$

Formula 11

$$\left(\left(P_{ID}+M_{ID}\right)\mathrm{mod}\left(floor\left(\frac{R_{PRB,CS}^{PSFCH}}{G}\right)\right)\right)+$$

$$g\times floor\left(\frac{R_{PRB,CS}^{PSFCH}}{G}\right)\mathrm{mod}\left(R_{PRB,CS}^{PSFCH}\Big/\left(N_{CS}^{PSFCH}\times N_{type}^{PSFCH}\right)\right)$$

Formula 12

The foregoing separately provides examples for description with reference to the two cases. For example, in any one of the foregoing cases, step 5 may be further included.

Step 5: When mapping of a PSSCH resource on a 1st corresponding PSFCH resource is completed, if one PSSCH resource corresponds to different resources in the same RB set in different slots, a PSFCH resource corresponding to the PSSCH resource is similar to the previous mapping in another slot, and may be directly referenced and copied. For example, reference may be made to FIG. 21. A resource of a same PSSCH resource mapped to a second PSFCH occasion is at a same location (a black box) as a resource of a 1st PSFCH occasion.

For the situation B, because mapping is performed at the RB set granularity in the situation B, when quantities of PSFCH resources indicated by bitmaps in the RB sets mapped twice are different, quantities of resources indicated by $M_{PRB,\sin gle,l}^{PSFCH}$ in the RB sets are also different. Therefore, Q times of complete steps 1 to 4 or Q times of some steps in steps 1 to 4 may be performed, to first obtain PSFCH resources corresponding to the resource set $M_{PRB,\sin gle,l}^{PSFCH}$:

$$\left[\left(i+j\cdot N_{PSSCH}^{PSFCH}\right)\cdot M_{subch,slot}^{PSFCH},\left(i+1+j\cdot N_{PSSCH}^{PSFCH}\right)\cdot M_{subch,slot}^{PSFCH}-1\right]$$

. In the resource set *M PSFCH* a possible value of *l* is Q values in $Q_{RP}$ after being determined based on the foregoing mapping direction. To be specific, when Q=2 and $Q_{RP}$=3, values of *l* in may be 1 and 2. Then, a corresponding PSFCH resource element number is obtained.

It may be understood that, the foregoing steps are examples for description, and this is not limited. For example, when a PSFCH occasion in a slot is not equal to a quantity of RB sets in a resource pool, a corresponding RB set may also be selected for mapping based on the manner described in step 4. In this case, mapping may be performed again based on the quantity of PSFCH resources in the selected RB set, that is, a corresponding PRB resource and a PSFCH sequence pair are obtained again based on the manner in step 2 to step 4.

For ease of understanding, the following provides a specific example with reference to two different scenarios.

Scenario 1: PSFCH resources in each RB set are the same, that is, quantities of bits whose values are 1 in different RB sets in the bitmap in the resource pool are the same.

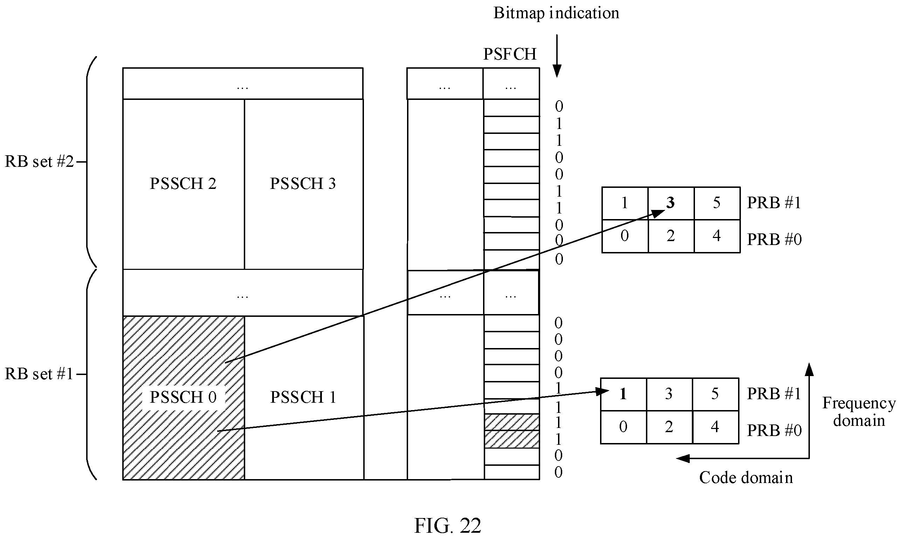

FIG. 22 is a diagram of mapping of a PSSCH resource and a corresponding PSFCH resource.

As shown in FIG. 22, the resource pool includes two RB sets. It is assumed that values of parameters are as follows: a sequence pair resource $N_{CS}^{PSFCH}=3$; a PSFCH period $N_{PSSCH}^{PSFCH}=2$; a quantity $N_{subch}$ = 8 of subchannels, where each RB set has four subchannels; a quantity $M_{PRB,set}^{PSFCH} = 16 \times 2$ of PSFCH resources in the resource pool, where each RB set includes 16 PSFCH resources; and $P_{ID}$ = 1, where G=2 and Q=1, that is, one PSSCH is associated with two different frequency domain elements in one slot.

Example 1: The mapping relationship in the solution 1 is used as an example.

(1) For a mapping manner in which per RB set is used, it is assumed that after resources are allocated based on an RB set, $R_{PRB,CS}^{PSFCH} = 6$, and each PSSCH corresponds to two PSFCH resources, a specific calculation manner is as follows.

$$M_{subch,slot}^{PSFCH} = M_{PRB,set}^{PSFCH} / \left( N_{subch} \cdot N_{PSSCH}^{PSFCH} \right) = 16 / (2 \times 4) = 2$$

$$R_{PRB,CS}^{PSFCH} = N_{type}^{PSFCH} \cdot M_{subch,slot}^{PSFCH} \cdot N_{CS}^{PSFCH} = 1 \times 2 \times 3 = 6$$

(2) A plurality of PSFCH resources are numbered in a manner of frequency domain ascending order first and then time domain ascending order.

For a 1st PSFCH resource (q, g)=(0, 0) corresponding to a PSSCH 0, details are as follows.

According to Formula 1, a sequence index is:

$$\left( P_{ID} + M_{ID} + q \times G + g \right) \bmod R_{PRB,CS}^{PSFCH} = (1 + 0 + 0 + 0) \bmod (6) = 1.$$

According to Formula 2, a PRB index is:

$$\left( \left( P_{ID} + M_{ID} + q \times G + g \right) \bmod R_{PRB,CS}^{PSFCH} \right) \bmod \left( R_{PRB,CS}^{PSFCH} / \left( N_{CS}^{PSFCH} \times N_{type}^{PSFCH} \right) \right)$$
$$= \left( (1 + 0 + 0 + 0) \bmod (6) \right) \bmod (6 / (3 \times 1)) = 1$$

It can be learned through calculation that the sequence index of the 1st PSFCH resource corresponding to the PSSCH 0 is 1, and the PRB index is 1, as shown in FIG. 22.

For a 2nd PSFCH resource (q, g)=(1, 0) corresponding to the PSSCH 0, details are as follows.

According to Formula 1, a sequence index is:

$$\left( P_{ID} + M_{ID} + q \times G + g \right) \bmod R_{PRB,CS}^{PSFCH} = (1 + 0 + 1 \times 2 + 0) \bmod (6) = 3.$$

According to Formula 2, a PRB index is:

$$\left( \left( P_{ID} + M_{ID} + q \times G + g \right) \bmod R_{PRB,CS}^{PSFCH} \right) \bmod \left( R_{PRB,CS}^{PSFCH} / \left( N_{CS}^{PSFCH} \times N_{type}^{PSFCH} \right) \right)$$
$$= \left( (1 + 0 + 1 \times 2 + 0) \bmod (6) \right) \bmod (6 / (3 \times 1)) = 1$$

It can be learned through calculation that the sequence index of the 2nd PSFCH resource corresponding to the PSSCH 0 is 3, and the PRB index is 1, as shown in FIG. 22.

It can be learned from the foregoing that sequence numbers of two PSFCH resources corresponding to the PSSCH 0 are different. It can be learned from the foregoing steps that, as shown in FIG. 22, the two PSFCH resource elements corresponding to the PSSCH 0 are: a PSFCH resource element corresponding to the sequence index 1 and the PRB index 1, and a PSFCH resource element corresponding to the sequence index 3 and the PRB index 1.

It may be understood that, in a scenario in which a quantity of bits whose values are 1 in different RB sets in the bitmap in the resource pool is the same, each PSFCH resource does not need to be recalculated from the foregoing step 1, and an index of a PSFCH resource corresponding to the mapping relationship is directly copied. A corresponding location may be: a location corresponding to a bit value of 1 in a 2nd RB set in the bitmap corresponding to a 2nd PSFCH resource

corresponding to the PSSCH is determined based on a location corresponding to a bit value of 1 in a 1st RB set in the bitmap corresponding to a 1st PSFCH resource corresponding to the PSSCH. FIG. 22 is used as an example. For a PSSCH numbered 0, if PSFCH resources corresponding to the PSSCH are two smallest-numbered RB resources in RB resources with bit values of 1 in an RB set #1, PSFCH resources corresponding to the PSSCH in an RB set #2 are also two smallest-numbered RB resources in the RB resources with bit values of 1.

For a mapping relationship of the solution 2 to the solution 4, refer to example 1. Details are not described herein again.

Example 2: The mapping relationship in the solution 5 is used as an example.

(1) For a mapping manner in which per RB set is used, it is assumed that after resources are allocated based on an RB set, $R_{PRB,CS}^{PSFCH} = 6$ , and each PSSCH corresponds to two PSFCH resources, a specific calculation manner is as follows.

$$M_{subch,slot}^{PSFCH} = M_{PRB,set}^{PSFCH} \Big/ \Big( N_{subch} \cdot N_{PSSCH}^{PSFCH} \Big) = 16 \Big/ \big( 2 \times 4 \big) = 2$$

$$R_{PRB,CS}^{PSFCH} = N_{type}^{PSFCH} \cdot M_{subch,slot}^{PSFCH} \cdot N_{CS}^{PSFCH} = 1 \times 2 \times 3 = 6$$

(2) A plurality of PSFCH resources are numbered in a manner of frequency domain ascending order first and then time domain ascending order.

For a 1 st PSFCH resource (q, g)=(0, 0) and a 2nd PSFCH resource (q, g)=(1,0) corresponding to a PSSCH 0, details are as follows.

According to Formula 9, a sequence index is:

$$\big( P_{ID} + M_{ID} \big) \bmod R_{PRB,CS}^{PSFCH} = \big( 1 + 0 \big) \bmod \big( 6 \big) = 1$$ .

According to Formula 10, a PRB index is:

$$\Big( \big( P_{ID} + M_{ID} \big) \bmod R_{PRB,CS}^{PSFCH} \Big) \bmod \Big( R_{PRB,CS}^{PSFCH} \Big/ \Big( N_{CS}^{PSFCH} \times N_{type}^{PSFCH} \Big) \Big)$$
$$= \Big( \big( 1 + 0 \big) \bmod \big( 6 \big) \Big) \bmod \Big( 6 \Big/ \big( 3 \times 1 \big) \Big) = 1$$ .

It can be learned through calculation that, based on the solution 5, sequence numbers of the two PSFCH resources corresponding to the PSSCH 0 are the same.

It may be understood that, in a scenario in which a quantity of bits whose values are 1 in different RB sets in the bitmap in the resource pool is the same, calculation does not need to be performed on each PSFCH resource. Specifically, a location of a PSFCH resource corresponding to a PSSCH may be: a location in a 2nd RB set is found based on a location of a 1st PSFCH resource in a 1st RB set. FIG. 22 is used as an example. For a PSSCH numbered 0, if PSFCH resources corresponding to the PSSCH are two smallest-numbered RB resources in RB resources with bit values of 1 in an RB set #1, PSFCH resources corresponding to the PSSCH in an RB set #2 are also two smallest-numbered RB resources in the RB resources with bit values of 1.

Scenario 2: PSFCH resources in each RB set are different, that is, quantities of bits whose values are 1 in different RB sets in the bitmap in the resource pool are different.

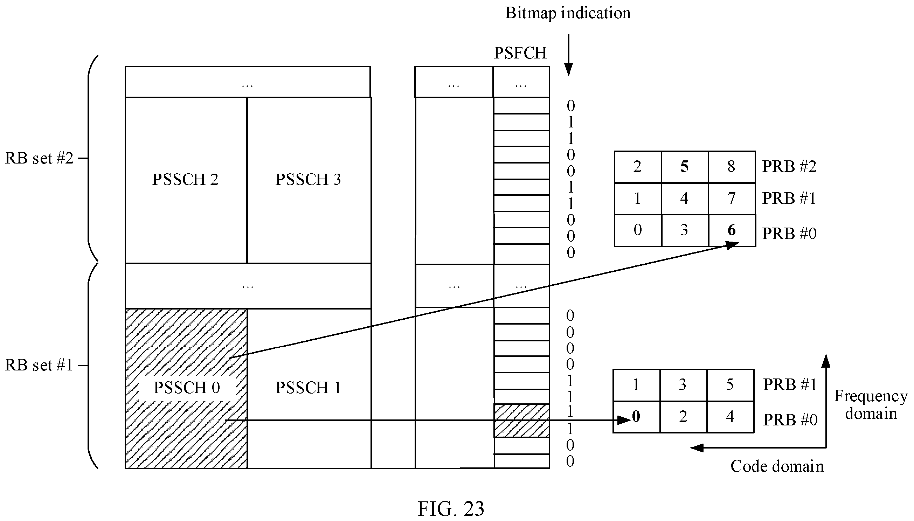

FIG. 23 is another diagram of mapping of a PSSCH resource and a corresponding PSFCH resource.

As shown in FIG. 23, the resource pool includes two RB sets. It is assumed that values of parameters are as follows: a sequence pair resource $N_{CS}^{PSFCH} = 3$ ; a PSFCH period $N_{PSSCH}^{PSFCH} = 2$ ; a quantity $N_{subch} = 8$ of subchannels, where each RB set has four subchannels; a quantity $M_{PRB,set}^{PSFCH} = 16 + 24$ of PSFCH resources in the resource pool, where an RB set #1 includes 16 PSFCH resources, and an RB set #2 includes 24 PSFCH resources; and $P_{ID} = 6$, where G=2 and Q=1, that is, one PSSCH is associated with two different frequency domain elements in one slot.

The mapping relationship in the solution 5 is used as an example for description. Other solutions are similar, and details are not described herein again.

1) For a mapping manner in which per RB set is used, it is assumed that after resources are allocated based on an RB set, a specific calculation manner is as follows.

$$R_{PRB,CS}^{PSFCH} = 6$$

of the RB set#1:

$$M_{subch,slot}^{PSFCH} = M_{PRB,set}^{PSFCH} / \left( N_{subch} \cdot N_{PSSCH}^{PSFCH} \right) = 16 / (2 \times 4) = 2$$

$$R_{PRB,CS}^{PSFCH} = N_{type}^{PSFCH} \cdot M_{subch,slot}^{PSFCH} \cdot N_{CS}^{PSFCH} = 1 \times 2 \times 3 = 6$$

$$R_{PRB,CS}^{PSFCH} = 9$$

of the RB set#2:

$$M_{subch,slot}^{PSFCH} = M_{PRB,set}^{PSFCH} / \left( N_{subch} \cdot N_{PSSCH}^{PSFCH} \right) = 24 / (2 \times 4) = 3$$

$$R_{PRB,CS}^{PSFCH} = N_{type}^{PSFCH} \cdot M_{subch,slot}^{PSFCH} \cdot N_{CS}^{PSFCH} = 1 \times 3 \times 3 = 9$$

(2) A plurality of PSFCH resources are numbered in a manner of frequency domain ascending order first and then time domain ascending order.

For a 1st PSFCH resource (q, g)=(0, 0) corresponding to a PSSCH 0, details are as follows.

According to Formula 9, a sequence index is:

$$\left( P_{ID} + M_{ID} \right) \bmod R_{PRB,CS}^{PSFCH} = (6+0) \bmod (6) = 0 .$$

According to Formula 10, a PRB index is:

$$\left( \left( P_{ID} + M_{ID} \right) \bmod R_{PRB,CS}^{PSFCH} \right) \bmod \left( R_{PRB,CS}^{PSFCH} / \left( N_{CS}^{PSFCH} \times N_{type}^{PSFCH} \right) \right)$$
$$= \left( (6+0) \bmod (6) \right) \bmod \left( 6 / (3 \times 1) \right) = 0$$

It can be learned through calculation that a sequence index of the 1st PSFCH resource corresponding to the PSSCH 0 is 0, and the PRB index is 0, as shown in FIG. 23.

For a 2nd PSFCH resource (q, g)=(1, 0) corresponding to the PSSCH 0, details are as follows.

According to Formula 9, a sequence index is:

$$\left( P_{ID} + M_{ID} \right) \bmod R_{PRB,CS}^{PSFCH} = (6+0) \bmod (9) = 6 .$$

According to Formula 10, a PRB index is:

$$\left( \left( P_{ID} + M_{ID} \right) \bmod R_{PRB,CS}^{PSFCH} \right) \bmod \left( R_{PRB,CS}^{PSFCH} / \left( N_{CS}^{PSFCH} \times N_{type}^{PSFCH} \right) \right)$$
$$= \left( (6+0) \bmod (9) \right) \bmod \left( 9 / (3 \times 1) \right) = 0$$

It can be learned through calculation that a sequence index of the 1st PSFCH resource corresponding to the PSSCH 0 is 6, and the PRB index is 0, as shown in FIG. 23.

The foregoing example is an example for description, and this is not limited.

According to an aspect 2, when one PSSCH resource corresponds to a plurality of PSFCH resources, PSFCHs corresponding to different PSSCHs are distinguished.

In a possible manner, a PSFCH sequence is used for distinguishing. For details, refer to the foregoing term explanation. Details are not described herein again.

In another possible manner, an encoding manner is used for distinguishing. That is, the encoding manner of the PSFCH may be used to identify a PSSCH corresponding to a PSFCH.

When one PSSCH corresponds to G PSFCH resources in a same RB set in different slots, a corresponding mapping sequence may be distinguished by using $ceil\left(\log_2^G\right)$ bit resources. The ceil() function represents returning a minimum integer greater than or equal to a specified expression. In addition, 1 bit may be further used to feed back whether the PSFCH transmits a PSSCH receiving status, that is, an HAQR-ACK, or a conflict state, that is, scheme 2 resource conflict information. A possible representation form of the PSFCH information is (x, HARQ-ACK/conflict indication). Herein, x represents the number of a PSFCH resource, and PSFCH resources may be sorted from nearest to farthest in time from PSSCH resources.

In this embodiment of this application, the PSFCH may have different formats. For example, when SL-U supports a plurality of PSFCH formats (formats) at the same time, a PSFCH format supported in the resource pool may be provided in resource pool configuration information, a PSFCH format supported in the COT may be provided in the COT, or a PSFCH format supported at a specific PSFCH resource location of the COT may be provided in the COT. For example, when both a PSFCH format 0 designed in R16 and another PSFCH format (it is assumed that a PSFCH format 1 is used herein) are supported in the resource pool, in a possible implementation, the first terminal apparatus sends format indication information. The format indication information indicates a format used to send sidelink feedback information in the COT of the first terminal apparatus.

In an example, the format indication information may indicate that the PSFCH format supported in the COT of the first terminal apparatus is the PSFCH format 0 or the PSFCH format 1. In this example, if another terminal apparatus sends a PSFCH in the COT of the first terminal apparatus, a format of the PSFCH is a format indicated by the format indication information, for example, the PSFCH format 0 or the PSFCH format 1.

In another example, the format indication information may indicate that a PSFCH format of a last PSFCH resource in the COT of the first terminal apparatus is the PSFCH format 1. In this example, if another terminal apparatus sends a PSFCH on the last PSFCH resource in the COT of the first terminal apparatus, a PSFCH format is the PSFCH format 1; or if the another terminal apparatus sends the PSFCH on another PSFCH resource in the COT of the first terminal apparatus, the PSFCH format is the PSFCH format 0.

In another example, the format indication information may indicate that the PSFCH format of a $b^{th}$ PSFCH resource in the COT of the first terminal apparatus is the PSFCH format 1, where b is an integer greater than or equal to 1. In this example, if another terminal apparatus sends a PSFCH on the $b^{th}$ PSFCH resource in the COT of the first terminal apparatus, a PSFCH format is the PSFCH format 1; or if the another terminal apparatus sends the PSFCH on another PSFCH resource after the $b^{th}$ PSFCH resource in the COT of the first terminal apparatus, the PSFCH format is the PSFCH format 0.

The following uses an example in which the first terminal apparatus is a COT initiator for description.

The COT initiator may indicate, at the beginning of the COT, that the COT supports the PSFCH format 0 or the PSFCH format 1. Alternatively, the COT initiator indicates that feeding back on a last PSFCH feedback resource in the COT is performed based on the PSFCH format 1, and feeding back on another PSFCH resource in the COT is performed based on the PSFCH format 0. After the UE successfully performs LBT, the UE performs transmission in the COT, which may be referred to as that the UE initializes the COT, and the UE may be referred to as a COT initiator. The COT initiator may also be referred to as an initial UE or a UE of an initial COT.

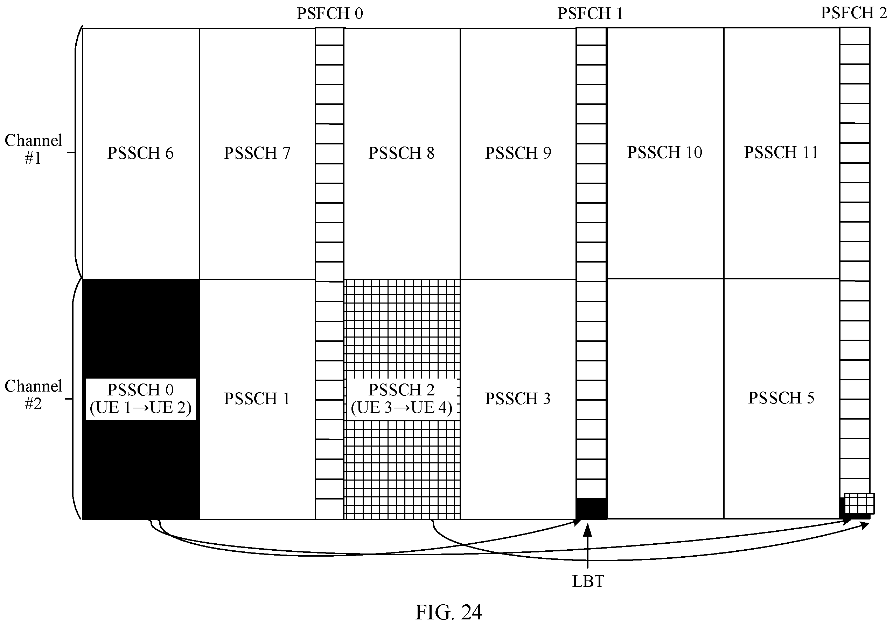

FIG. 24 is a diagram in which one PSSCH resource corresponds to a plurality of PSFCH resources in time domain.

As shown in FIG. 24, it is assumed that a period of a PSFCH resource is 2, a processing delay is 2 slots, and one PSSCH corresponds to two PSFCH resources in different slots, that is, G=2. According to the mapping relationship, a PSFCH resource corresponding to the PSSCH 0 is in a black box at a PSFCH 1 location. Therefore, when the UE 2 performs feeding back for the first time, that is, when the UE 2 sends the PSFCH corresponding to the PSSCH 0, the UE 2 attempts to perform an LBT operation on the channel #2. When the LBT fails, the UE 2 continues to perform an LBT operation at a $2^{nd}$ PSFCH location, that is, an occasion of a PSFCH 2 on the channel #2. It can be seen from the figure that, a same PSFCH location may carry feedback information from a plurality of PSSCHs. For example, the occasion of the PSFCH 2 includes feedback information of the PSSCH 0 sent by the UE 1 to the UE 2 and feedback information of a PSSCH 2 sent by a UE 3 to a UE 4.

To distinguish feedbacks from different PSSCHs, the UE may distinguish the feedbacks in an encoding manner. For example, it is assumed that the UE 2 does not successfully receive the PSSCH 0, and a representation form of a PSFCH corresponding to the PSSCH 0 is (1, NACK); and the UE 4 successfully receives the PSSCH 2, and a representation form of a PSFCH corresponding to PSSCH 2 is (0, ACK). The UE 1 and the UE 3 receive and decode the PSFCH in a black box, that is, a shadow square, in the PSFCH 2. If the UE 1 obtains (1, NACK) through decoding, it is determined, according to "1" in the PSFCH, that the PSFCH is a PSFCH corresponding to the PSSCH 0, and the UE 1 determines, according to "NACK" in the PSFCH, that the PSSCH 0 fails to be received and the UE 1 needs to perform retransmission. If the UE 3 obtains (0, ACK) through decoding, it is determined, according to "0" in the PSFCH, that the PSFCH is a PSFCH corresponding to the PSSCH 2, and the UE 3 determines that the PSSCH 2 is correctly received according to "ACK" in the PSFCH.

According to the aspect 3, when one PSSCH resource corresponds to a plurality of PSFCH resources, a resource occupied for actually sending a PSFCH is determined.

When one PSSCH resource corresponds to a plurality of PSFCH resources, the UE may perform LBT at a plurality of locations, that is, the UE may perform LBT on a channel on which each of the plurality of PSFCH resources is located. For PSFCH resources on an LBT success channel, for example, denoted as W PSFCH resources, assuming that W is an integer greater than 1, the resource occupied for actually sending the PSFCH may be determined based on the following conditions, for example, denoted as a first resource element. For example, the first resource element is a part of the W PSFCH resources. For example, the first resource is a PSFCH resource that is in the W PSFCH resources and that satisfies any one of the following conditions.

Condition 1: An RB set in which the first resource element is located is the same as an RB set in which the UE receives a PSSCH.

Based on this, the UE may preferentially select a PSFCH resource in the RB set in which the PSSCH is received.

For example, if the UE 1 receives a first PSSCH in the first RB set, the UE 1 sends the first PSFCH by using a PSFCH resource located in a first RB set in the W PSFCH resources. The first PSFCH is used to indicate a state of the first PSSCH. In this case, the first PSSCH and the first PSFCH belong to a COT preempted by a same COT initiator.

Condition 2: An RB set in which the first resource element is located is the same as an RB set in which the UE sends a PSSCH.

Based on this, the UE may preferentially select a PSFCH resource in the RB set in which the PSSCH is sent.

For example, if the UE 1 receives a first PSSCH in a first RB set, and the UE 1 sends a second PSSCH in a second RB set, the UE 1 sends the first PSFCH by using a PSFCH resource located in the second RB set in the W PSFCH resources. The first PSFCH is used to indicate a state of the first PSSCH. In this case, the first PSSCH belongs to a COT preempted by a specific COT initiator, and the second PSSCH and the first PSSCH belong to a COT preempted by the UE 1.

Condition 3: The first resource element belongs to a COT resource of the UE.

The COT resource of the UE includes at least one of the following: a COT resource on which LBT of the UE succeeds, and a COT resource shared by the UE and another apparatus. The COT resource shared by the UE and the another apparatus may be, for example, a COT resource shared by the UE and another UE. It may be understood that the COT resource includes a resource on a channel on which LBT succeeds, that is, includes a resource in time domain and a resource in frequency domain.

For example, the UE may transmit a PSFCH on any PSFCH resource that satisfies the foregoing conditions. For example, if the COT resource of the UE includes: a COT resource on which LBT of the UE succeeds and a COT resource shared by the UE and the another apparatus, the UE may send a PSFCH on any PSFCH resource in the COT resource on which the LBT of the UE succeeds, or the UE may send a PSFCH on any PSFCH resource in the COT resource shared by the UE and the another apparatus.

FIG. 15 is used as an example, when a PSSCH resource on the channel #2 corresponds to a PSFCH resource 0 and a PSFCH resource 1, if the UE succeeds in LBT in PSFCH resources corresponding to the channel #1 and the channel #2 at the same time, because the PSFCH resource 0 corresponds to an RB set in which the COT corresponding to the PSSCH received by the UE is located, and the PSFCH resource 1 corresponds to a COT that is currently being transmitted by the UE, in this case, the UE may randomly select one of the PSFCH resource 0 and the PSFCH resource 1 to send the PSFCH. For example, to ensure that the COT is not lost, the UE may send the PSFCH on both the PSFCH resource 0 and the PSFCH resource 1.

Condition 4: An index of the first resource element is a preset index, or a number of the first resource element is a preset number.

For the number of the PSFCH, refer to the description in the foregoing aspect 1, for example, numbering is performed in frequency domain first and then in time domain. The preset index may also be referred to as a preset number, and may be, for example, any one of the following: a maximum index in the W PSFCH resources, a minimum index in the W PSFCH resources, or a specific index in the W PSFCH resources.

For example, the index of the first resource element is the maximum index in the W PSFCH resources. Based on this, the first resource element is a PSFCH resource element with a maximum index in the W PSFCH resources.

For another example, the index of the first resource element is the minimum index in the W PSFCH resources. Based on this, the first resource element is a PSFCH resource element with a minimum index in the W PSFCH resources.

For another example, the index of the first resource element is the specific index in the W PSFCH resources, for example, an index z. Based on this, the first resource element is a PSFCH resource with an index z in the W PSFCH resources. The index z may be, for example, a middle index.

Condition 5: The first resource element is any one or more of the W PSFCH resources.

Based on this, the UE may send a PSFCH on any one or more PSFCH resources of the W PSFCH resources.

The foregoing conditions are examples for description, and embodiments of this application are not limited thereto. In addition, the foregoing conditions may be used separately or in combination. For example, the first resource element may satisfy the COT resource of the UE, and satisfy a PSFCH resource whose index is a preset index in the COT resource of the UE.

Optionally, if the UE successfully performs LBT on only one channel, a PSFCH resource on the channel is selected, and the PSFCH resource on the channel is no longer used subsequently.

Optionally, if the UE fails to perform LBT in a current slot, and a PSFCH resource is still available in a next slot, the UE may continue to determine the first resource element according to the foregoing conditions such as the condition 1 to the condition 5.

Optionally, when a dynamic PSFCH feedback is supported (and is in a valid PSFCH feedback time) or one PSSCH corresponds to a plurality of PSFCH resources, if a PSFCH corresponding to the PSSCH is successfully sent in one PSFCH resource, the PSFCH corresponding to the PSSCH is no longer sent. The dynamic PSFCH feedback indicates that the UE may send, in any PSFCH resource, the PSFCH corresponding to the PSSCH.

According to an aspect 4, when one PSSCH resource corresponds to a plurality of PSFCH resources, the PSFCH resource may include an interlace, that is, an interlaced RB.

In a first possible situation, the PSFCH resource includes a common interlace (common interlace).

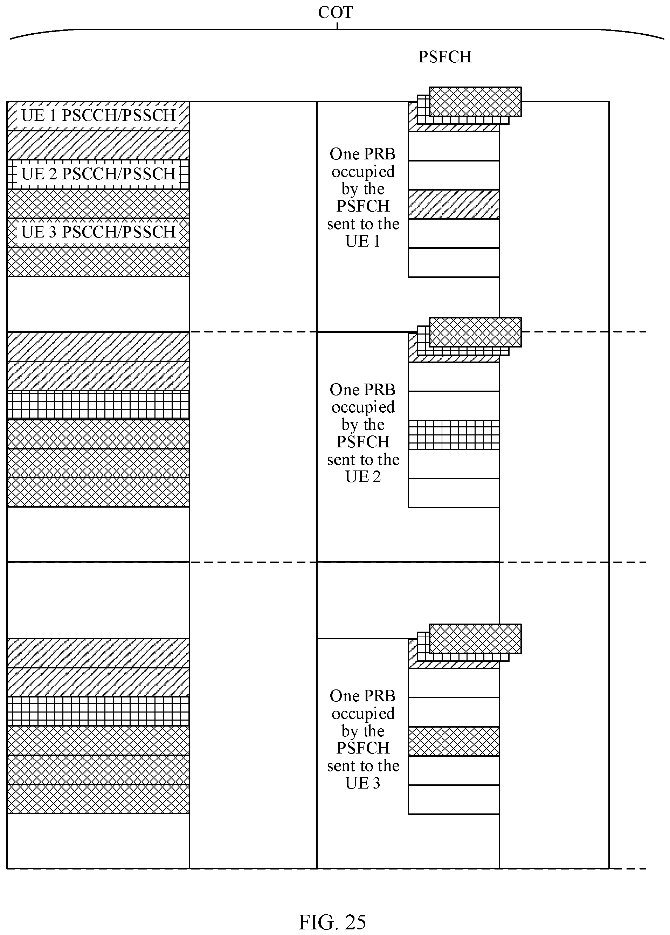

In this situation, the UE may perform an HARQ-ACK feedback by using 1 PRB resource in a manner defined in R16, and transmit a PSFCH on the common interlace, and there is no corresponding mapping relationship between a PSSCH and the PSFCH on the common interlace, as shown in FIG. 25.

FIG. 25 is a diagram in which a PSFCH resource includes 1 RPB and a common interlace.

As shown in FIG. 25, when the UE 1, the UE 2, and the UE 3 occupy an interlace resource in a COT, at a corresponding PSFCH resource feedback, a resource occupied by a PSFCH sent to the UE 1 includes a common interlace and 1 PRB resource determined based on the mapping relationship, and a resource occupied by a PSFCH sent to the UE 2 includes a common interlace and 1 PRB resource determined based on the mapping relationship, and a resource occupied by a PSFCH sent to the UE 3 includes a common interlace and 1 PRB resource determined based on the mapping relationship. It can be learned from FIG. 25 that the UEs may share a common interlace.

In a second possible situation, the PSFCH resource includes an interlace corresponding to the UE.

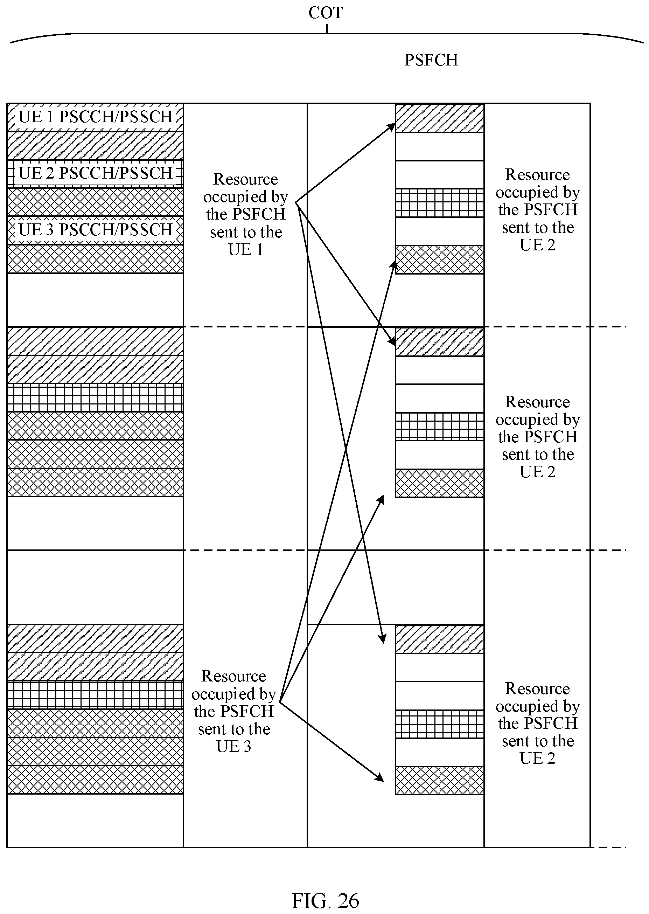

In this situation, 1 PRB resource determined based on the mapping relationship may be expanded to a PRB resource occupied by the interlace, as shown in FIG. 26.

FIG. 26 is a diagram in which the PSFCH resource includes an interlace.

As shown in FIG. 26, a resource occupied by a PSFCH sent to the UE 1 includes an interlace corresponding to the UE 1, a resource occupied by a PSFCH sent to the UE 2 includes an interlace corresponding to the UE 2, and a resource occupied by a PSFCH sent to the UE 3 includes an interlace corresponding to the UE 3.

It may be understood that the foregoing separately describes content of each aspect, and the content of each aspect may be used separately or in combination. For example, the content of the aspect 2 and the content of the aspect 3 are used together. In other words, the solution of the aspect 2 may be used for an interlaced structure. To be specific, receiving end UEs of a plurality of PSSCH resources may simultaneously perform feeding back on interlaces occupied by corresponding PSFCH resources. In other words, an original resource of 1 PRB is extended to all PRB resources in an interlace in which the PRB is located, and PSFCHs corresponding to different PSSCHs are distinguished through code division.

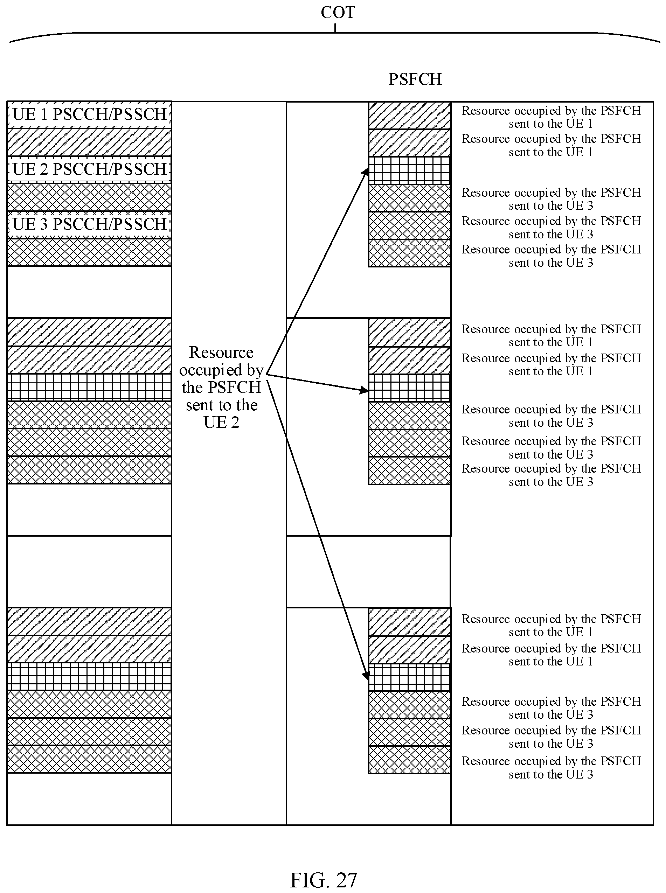

FIG. 27 is a diagram of distinguishing transmission of different PSFCHs through code division when an IRB structure is used.

As shown in FIG. 27, the UE 1 occupies two interlaced resources. In this case, at a corresponding PSFCH feedback occasion, a receiving end user of the UE 1 sends a PSFCH in a corresponding interlace, and specific information indicated in the PSFCH may be distinguished through code division.

It may be further understood that, in some of the foregoing embodiments, "transmission" is mentioned. Unless otherwise specified, transmission includes receiving and/or sending. For example, transmitting a signal may include receiving a signal and/or sending a signal.

It may be further understood that, in some of the foregoing embodiments, an example in which PRB resources whose bit values are 1 in the bitmap form a PSFCH resource is mainly used for description, that is, a resource whose bit value is 1 that is in the bitmap and that is used to transmit a PSFCH is used for description. This is not limited. For example, in another possible case, a PRB resource whose bit value is 0 in the bitmap forms a PSFCH resource, that is, the resource whose bit value is 0 in the bitmap is used to transmit the PSFCH.

It may be further understood that, in some of the foregoing embodiments, an example in which one bitmap indicates a PSFCH resource in a resource pool is mainly used for description. This is not limited. For example, when a resource pool includes A RB sets, A bitmaps may be used to indicate PSFCH resources in the A RB sets, and each bitmap indicates a PSFCH resource in one RB set, where A is an integer greater than 1.

It may be further understood that the formulas used in embodiments of this application are merely examples for description, and do not constitute a limitation on the protection scope of embodiments of this application. In a process in which the foregoing parameters are calculated, calculation may be performed according to the foregoing formulas, calculation may be performed based on variations of the foregoing formulas, or calculation may be performed in another manner, to satisfy a calculation result of the formulas. For example, a rounding function in the formula may also be replaced with another rounding function.

It may be further understood that, in the foregoing formulas, "×" and "·" are sometimes used alternately, and represents an operation symbol of multiplication.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that in the foregoing method embodiments, the methods and the operations implemented by the terminal device may be also implemented by a component (for example, a chip or a circuit) of the terminal device. In addition, the methods and the operations implemented by the network device may also be implemented by a component (for example, a chip or a circuit) of the network device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

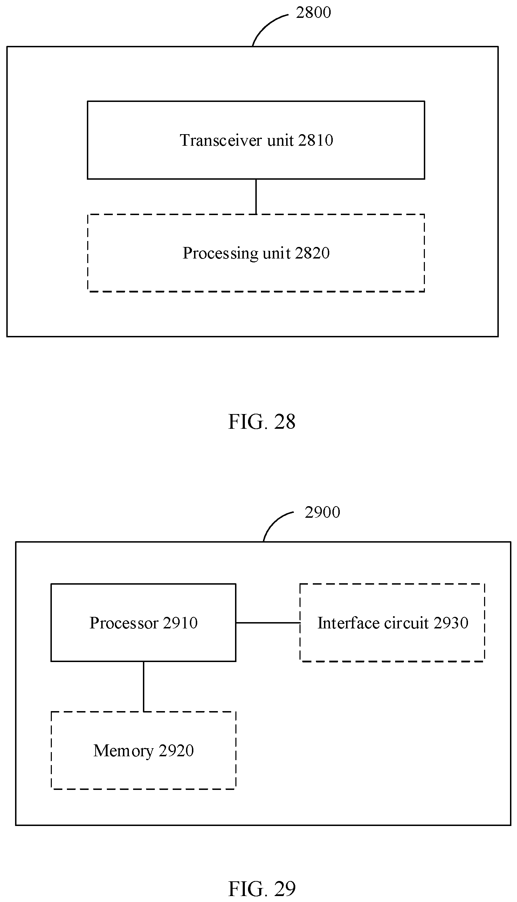

FIG. 28 is a diagram of a communication apparatus 2800 according to an embodiment of this application. The apparatus 2800 includes a transceiver unit 2810, and the transceiver unit 2810 may be configured to implement a corresponding communication function. The transceiver unit 2810 may also be referred to as a communication interface or a communication unit.

Optionally, the apparatus 2800 may further include a processing unit 2820, and the processing unit 2820 may be configured to perform data processing.

Optionally, the apparatus 2800 further includes a storage unit. The storage unit may be configured to store instructions and/or data. The processing unit 2820 may read the instructions and/or the data in the storage unit, to enable the apparatus to implement actions performed by the terminal device or the network device in the foregoing method embodiments.

In a first design, the apparatus 2800 may be the first terminal apparatus in the foregoing embodiments, or may be a component (for example, a chip) of the first terminal apparatus. The apparatus 2800 may implement the steps or procedures performed by the first terminal apparatus in the foregoing method embodiments. The transceiver unit 2810 may be configured to perform receiving/sending-related operations of the first terminal apparatus in the foregoing method embodiments. The processing unit 2820 may be configured to perform processing-related operations of the first terminal apparatus in the foregoing method embodiments.

In a possible implementation, the apparatus 2800 is configured to implement a function of the first terminal apparatus in the method embodiment shown in FIG. 12. For example, the processing unit 2820 is configured to access a first channel. The transceiver unit 2810 is configured to receive first sidelink data on a first resource. The transceiver unit 2810 is further configured to send first sidelink feedback information on a second resource. The first sidelink feedback information indicates a receiving status of the first sidelink data, the second resource is a resource corresponding to the first resource, and the first resource and the second resource belong to the first channel.

Optionally, the transceiver unit 2810 is further configured to obtain configuration information of a resource pool. The resource pool includes at least two channels, the at least two channels include the first channel, the configuration information of the resource pool indicates that a quantity of resource elements that are used to send sidelink feedback information on each of the at least two channels is M, and M is an integer greater than 1.

Optionally, the processing unit 2820 is configured to determine the second resource based on the configuration information of the resource pool.

Optionally, the resource elements that are used to send sidelink feedback information on each of the at least two channels have a same location.

Optionally, the configuration information is a bitmap, and the bitmap has a same quantity of bits with a value of 1 on each of the at least two channels.

In another possible implementation, the apparatus 2800 is configured to implement a function of the first terminal apparatus in the method embodiment shown in FIG. 14. For example, the transceiver unit 2810 is configured to receive first sidelink data on a first resource. The transceiver unit 2810 is further configured to send first sidelink feedback information on a first resource element. The first sidelink feedback information indicates a receiving status of the first sidelink data, the first resource element belongs to a second resource, the second resource is a resource corresponding to the first resource, and the second resource includes at least two resource elements.

Optionally, the at least two resource elements are located at different time domain locations and/or different frequency domain locations.

Optionally, an index of the second resource satisfies:

$$\left(P_{ID} + M_{ID} + \Delta 1\right) \bmod \left( floor\left( \frac{R_{PRB,CS}^{PSFCH}}{L} \right) \right) + \Delta 2 .$$

Herein, $P_{ID}$ represents a physical layer source address identifier ID carried in control information, $M_{ID}$ represents an ID indicated by a higher layer for the first sidelink data of the first terminal apparatus during multicast transmission, $R_{PRB,CS}^{PSFCH}$ represents a quantity of resource elements that correspond to the first sidelink data and that are used to send the first sidelink feedback information in a resource block set or in a resource pool, $\Delta 1$ and $\Delta 2$ represents resource element index offsets, the resource element index offsets are related to a resource mapping location of the first sidelink feedback information, $\Delta 1$ and $\Delta 2$ are integers greater than or equal to 0, and L is a positive integer.

Optionally, the processing unit 2820 is configured to determine the first sidelink feedback information based on the first resource.

Optionally, the first resource element satisfies at least one of the following conditions: the first resource element belongs to a resource in a channel occupancy time COT of the first terminal apparatus; a resource block set corresponding to the first resource element is a resource block set to which the first resource belongs; a resource block set corresponding to the first resource element is a resource block set corresponding to sidelink data sent by the first terminal apparatus; or a resource index of the first resource element is a preset index.

Optionally, the second resource further includes at least one interlaced resource block in frequency domain.

In a second design, the apparatus 2800 may be the second terminal apparatus in the foregoing embodiments, or may be a component (for example, a chip) of the second terminal apparatus. The apparatus 2800 may implement the steps or procedures performed by the second terminal apparatus in the foregoing method embodiments. The transceiver unit 2810 may be configured to perform receiving/sending-related operations of the second terminal apparatus in the foregoing method embodiments. The processing unit 2820 may be configured to perform processing-related operations of the second terminal apparatus in the foregoing method embodiments.

In a possible implementation, the apparatus 2800 is configured to implement a function of the second terminal apparatus in the method embodiment shown in FIG. 12. For example, the transceiver unit 2810 is configured to send first sidelink data on a first resource, and the transceiver unit 2810 is further configured to receive first sidelink feedback information on a second resource. The first sidelink feedback information indicates a receiving status of the first sidelink data, the second resource is a resource corresponding to the first resource, and the first resource and the second resource are on a same channel.

Optionally, the transceiver unit 2810 is further configured to obtain configuration information of a resource pool. The resource pool includes at least two channels, a quantity of resource blocks that are used to send sidelink feedback information on each of the at least two channels is M, and M is an integer greater than 1.

Optionally, the resource blocks that are used to send sidelink feedback information on each of the at least two channels have a same location.

Optionally, the configuration information is a bitmap, and the bitmap has a same quantity of bits with a value of 1 on each of the at least two channels.

In another possible implementation, the apparatus 2800 is configured to implement a function of the second terminal apparatus in the method embodiment shown in FIG. 14. For example, the transceiver unit 2810 is configured to send first sidelink data on a first resource. The transceiver unit 2810 is further configured to receive first sidelink feedback information on a first resource element. The first sidelink feedback information indicates a receiving status of the first sidelink data, the first resource element belongs to a second resource, the second resource is a resource corresponding to the first resource, and the second resource includes at least two resource elements.

Optionally, the at least two resource elements are located at different time domain locations and/or different frequency domain locations.

Optionally, an index of the second resource satisfies:

$$\left(P_{ID} + M_{ID} + \Delta 1\right) \mod \left( floor\left(\frac{R_{PRB,CS}^{PSFCH}}{L}\right)\right) + \Delta 2 \ .$$

Herein, $P_{ID}$ represents a physical layer source address identifier ID carried in control information, $M_{ID}$ represents an ID indicated by a higher layer for the first sidelink data of the first terminal apparatus during multicast transmission, $R_{PRB,CS}^{PSFCH}$ represents a quantity of resource elements that correspond to the first sidelink data and that are used to send the first sidelink feedback information in a resource block set or in a resource pool, $\Delta 1$ and $\Delta 2$ represents resource element index offsets, the resource element index offsets are related to a resource mapping location of the first sidelink feedback information, $\Delta 1$ and $\Delta 2$ are integers greater than or equal to 0, and L is a positive integer.

Optionally, the processing unit 2820 is configured to determine the first resource based on the first sidelink feedback information.

Optionally, the first resource element satisfies at least one of the following conditions: the first resource element belongs to a resource in a channel occupancy time COT of the first terminal apparatus; a resource block set corresponding to the first resource element is a resource block set to which the first resource belongs; a resource block set corresponding to the first resource element is a resource block set corresponding to sidelink data sent by the first terminal apparatus; or a resource index of the first resource element is a preset index.

Optionally, the second resource further includes at least one interlaced resource block in frequency domain.

It should be understood that a specific process in which the units perform the foregoing corresponding steps is described in detail in the foregoing method embodiments. For brevity, details are not described herein.

It should be understood that the apparatus 2800 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 2800 may be specifically the first terminal apparatus in the foregoing embodiments, and may be configured to perform procedures and/or steps corresponding to the first terminal apparatus in the foregoing method embodiments; or the apparatus 2800 may be specifically the second terminal apparatus in the foregoing embodiments, and may be configured to perform procedures and/or steps corresponding to the second terminal apparatus in the foregoing method embodiments. To avoid repetition, details are not described herein again.

The apparatus 2800 in the foregoing solutions has a function of implementing corresponding steps performed by the first terminal apparatus in the foregoing methods, or the apparatus 2800 in the foregoing solutions has a function of implementing corresponding steps performed by the second terminal apparatus in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver machine), and another unit, for example, the processing unit, may be replaced with a processor, to separately perform receiving/sending operations and a related processing operation in the method embodiments.

In addition, the transceiver unit 2810 may alternatively be a transceiver circuit (for example, may include a receiving circuit and a sending circuit), and the processing unit may be a processing circuit.

It should be noted that the apparatus in FIG. 28 may be a network element or a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 29 is a diagram of another communication apparatus 2900 according to an embodiment of this application. The apparatus 2900 includes a processor 2910. The processor 2910 is coupled to a memory 2920, the memory 2920 is configured to store a computer program or instructions and/or data, and the processor 2910 is configured to: execute the computer program or the instructions stored in the memory 2920, or read the data stored in the memory 2920, to perform the method in the foregoing method embodiments.

Optionally, there are one or more processors 2910.

Optionally, there are one or more memories 2920.

Optionally, the memory 2920 and the processor 2910 are integrated together, or are disposed separately.

Optionally, as shown in FIG. 29, the apparatus 2900 further includes an interface circuit 2930. The interface circuit 2930 is configured to receive and/or send a signal. The processor 2910 and the interface circuit 2930 are coupled to each other. For example, the processor 2910 is configured to control the interface circuit 2930 to receive and/or send a signal. It may be understood that the interface circuit 2930 may be a transceiver or an input/output interface.

When the apparatus 2900 is configured to implement the method shown in FIG. 12 or FIG. 14, the processor 2910 is configured to implement a function of the processing unit 920, and the interface circuit 2930 is configured to implement a function of the transceiver unit 910.

In a solution, the apparatus 2900 is configured to implement operations performed by the first terminal apparatus in the foregoing method embodiments.

For example, the processor 2910 is configured to execute the computer program or the instructions stored in the memory 2920, to implement the related operations of the first terminal apparatus in the foregoing method embodiments, for example, the method performed by the first terminal apparatus in the embodiment shown in FIG. 12 or FIG. 14.

In a solution, the apparatus 2900 is configured to implement operations performed by the second terminal apparatus in the foregoing method embodiments.

For example, the processor 2910 is configured to execute the computer program or the instructions stored in the memory 2920, to implement the related operations of the second terminal apparatus in the foregoing method embodiments, for example, the method performed by the second terminal apparatus in the embodiment shown in FIG. 12 or FIG. 14.

When the communication apparatus is a chip used in a terminal, the chip in the terminal implements functions of the terminal in the foregoing method embodiments. The chip in the terminal receives information from another module (for example, a radio frequency module or an antenna) in the terminal, and the information is sent by a base station to the terminal; or the chip in the terminal sends information to another module (for example, a radio frequency module or an antenna) in the terminal, and the information is sent by the terminal to a base station.

It should be understood that the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described herein is intended to include, but is not limited to, these and any other appropriate type of memory.

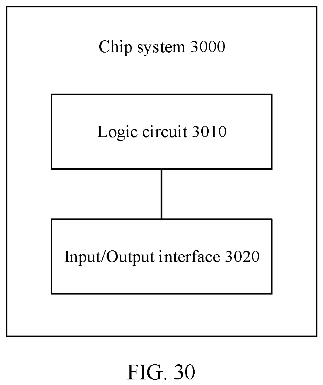

FIG. 30 is a diagram of a chip system 3000 according to an embodiment of this application. The chip system 3000 (or may be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 can implement the methods and functions in embodiments of this application. The input/output interface 3020 may be an input/output circuit in the chip system 3000, and outputs information processed by the chip system 3000, or inputs to-be-processed data or signaling information to the chip system 3000 for processing.

Specifically, for example, if the chip system 3000 is installed in a first terminal apparatus, the logic circuit 3010 is coupled to the input/output interface 3020, and the logic circuit 3010 may send sidelink feedback information to a second terminal apparatus through the input/output interface 3020. The sidelink feedback information may be generated by the logic circuit 3010; or the input/output interface 3020 may input sidelink data from the second terminal apparatus to the logic circuit 3010 for processing. For another example, if the chip system 3000 is installed in the second terminal apparatus, the logic circuit 3010 is coupled to the input/output interface 3020, and the logic circuit 3010 may send sidelink data to the first terminal apparatus through the input/output interface 3020. The sidelink data may be generated by the logic circuit 3010; or the input/output interface 3020 may input sidelink feedback information from the first terminal apparatus to the logic circuit 3010 for processing.

In a solution, the chip system 3000 is configured to implement operations performed by the first terminal apparatus in the foregoing method embodiments.

For example, the logic circuit 3010 is configured to implement a processing-related operation performed by the first terminal apparatus in the foregoing method embodiment, for example, a processing-related operation performed by the first terminal apparatus in the embodiment shown in FIG. 12 or FIG. 14. The input/output interface 3020 is configured to implement a sending-and/or receiving-related operation performed by the first terminal apparatus in the foregoing method embodiment, for example, a sending-and/or receiving-related operation performed by the first terminal apparatus in the embodiment shown in FIG. 12 or FIG. 14.

In another solution, the chip system 3000 is configured to implement operations performed by the second terminal apparatus in the foregoing method embodiments.

For example, the logic circuit 3010 is configured to implement a processing-related operation performed by the second terminal apparatus in the foregoing method embodiment, for example, a processing-related operation performed by the second terminal apparatus in the embodiment shown in FIG. 12 or FIG. 14. The input/output interface 3020 is configured to implement a sending-and/or receiving-related operation performed by the second terminal apparatus in the foregoing method embodiment, for example, a sending-and/or receiving-related operation performed by the second terminal apparatus in the embodiment shown in FIG. 12 or FIG. 14.

An embodiment of this application further provides a computer-readable storage medium. The computer-readable storage medium stores computer instructions used to implement the method performed by the first terminal apparatus or the second terminal apparatus in the foregoing method embodiments.

For example, when a computer program is executed by a computer, the computer is enabled to implement the method performed by the first terminal apparatus or the second terminal apparatus in the foregoing method embodiments.

An embodiment of this application further provides a computer program product, including instructions. When the instructions are executed by a computer, the method performed by the first terminal apparatus or the second terminal apparatus in the foregoing method embodiments is implemented.

An embodiment of this application further provides a communication system. The communication system includes the first terminal apparatus and the second terminal apparatus in the foregoing embodiments. For example, the system includes the first terminal apparatus and the second terminal apparatus in the embodiment shown in FIG. 12 or FIG. 14.

For explanations and beneficial effects of related content of any one of the apparatuses provided above, refer to the corresponding method embodiments provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a special-purpose computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, including one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   accessing, by a first terminal apparatus, a first channel;
   receiving, by the first terminal apparatus, first sidelink data on a first resource; and
   sending, by the first terminal apparatus, first sidelink feedback information on a second resource, wherein the first sidelink feedback information indicates a receiving status of the first sidelink data, the second resource is a resource corresponding to the first resource, and the first resource and the second resource belong to the first channel.

2. The method according to claim 1, wherein the method further comprises:
   obtaining, by the first terminal apparatus, configuration information of a resource pool, wherein the resource pool comprises at least two channels, the at least two channels comprise the first channel, the configuration information of the resource pool indicates that a quantity of resource elements that are used to send sidelink feedback information on each of the at least two channels is M, and M is an integer greater than 1.

3. The method according to claim 2, wherein the method further comprises:
   determining, by the first terminal apparatus, the second resource based on the configuration information of the resource pool.

4. The method according to claim 2 or 3, wherein the resource elements that are used to send sidelink feedback information on each of the at least two channels have a same location.

5. The method according to any one of claims 2 to 4, wherein the configuration information is a bitmap; and
   the bitmap has a same quantity of bits with a value of 1 on each of the at least two channels.

6. A communication method, comprising:

   receiving, by a first terminal apparatus, first sidelink data on a first resource; and
   sending, by the first terminal apparatus, first sidelink feedback information on a first resource element, wherein the first sidelink feedback information indicates a receiving status of the first sidelink data, the first resource element belongs to a second resource, the second resource is a resource corresponding to the first resource, and the second resource comprises at least two resource elements.

7. The method according to claim 6, wherein the at least two resource elements are located at different time domain locations and/or different frequency domain locations.

8. The method according to claim 6 or 7, wherein an index of the second resource satisfies:

$$\left(P_{ID} + M_{ID} + \Delta 1\right) \bmod \left( floor\left( \frac{R_{PRB,CS}^{PSFCH}}{L} \right)\right) + \Delta 2,$$

   wherein
   $P_{ID}$ represents a physical layer source address identifier ID carried in control information, $M_{ID}$ represents an ID indicated by a higher layer for the first sidelink data of the first terminal apparatus during multicast transmission, $R_{PRB,CS}^{PSFCH}$ represents a quantity of resource elements that correspond to the first sidelink data and that are used to send the first sidelink feedback information in a resource block set or in a resource pool, $\Delta 1$ and $\Delta 2$ represents resource element index offsets, the resource element index offsets are related to a resource mapping location of the first sidelink feedback information, $\Delta 1$ and $\Delta 2$ are integers greater than or equal to 0, and L is a positive integer.

9. The method according to any one of claims 6 to 8, wherein the method further comprises:
   determining, by the first terminal apparatus, the first sidelink feedback information based on the first resource.

10. The method according to any one of claims 6 to 9, wherein the first resource element satisfies at least one of the following conditions:

the first resource element belongs to a resource in a channel occupancy time COT of the first terminal apparatus; a resource block set corresponding to the first resource element is a resource block set to which the first resource belongs;
a resource block set corresponding to the first resource element is a resource block set corresponding to sidelink data sent by the first terminal apparatus; or
a resource index of the first resource element is a preset index.

11. The method according to any one of claims 6 to 10, wherein the second resource further comprises at least one interlaced resource block in frequency domain.

12. A communication method, comprising:

sending, by a second terminal apparatus, first sidelink data on a first resource; and
receiving, by the second terminal apparatus, first sidelink feedback information on a second resource, wherein the first sidelink feedback information indicates a receiving status of the first sidelink data, the second resource is a resource corresponding to the first resource, and the first resource and the second resource belong to a first channel.

13. The method according to claim 12, wherein the method further comprises:
obtaining, by the second terminal apparatus, configuration information of a resource pool, wherein the resource pool comprises at least two channels, the at least two channels comprise the first channel, the configuration information of the resource pool indicates that a quantity of resource elements that are used to send sidelink feedback information on each of the at least two channels is M, and M is an integer greater than 1.

14. The method according to claim 13, wherein the resource elements that are used to send sidelink feedback information on each of the at least two channels have a same location.

15. The method according to claim 13 or 14, wherein the configuration information is a bitmap, and the bitmap has a same quantity of bits with a value of 1 on each of the at least two channels.

16. A communication method, comprising:

sending, by a second terminal apparatus, first sidelink data on a first resource; and
receiving, by the second terminal apparatus, first sidelink feedback information on a first resource element, wherein the first sidelink feedback information indicates a receiving status of the first sidelink data, the first resource element belongs to a second resource, the second resource is a resource corresponding to the first resource, and the second resource comprises at least two resource elements.

17. The method according to claim 16, wherein the at least two resource elements are located at different time domain locations and/or different frequency domain locations.

18. The method according to claim 16 or 17, wherein an index of the second resource satisfies:

$$\left( P_{ID} + M_{ID} + \Delta 1 \right) \bmod \left( floor \left( \frac{R_{PRB,CS}^{PSFCH}}{L} \right) \right) + \Delta 2 ,$$

wherein
$P_{ID}$ represents a physical layer source address identifier ID carried in control information, $M_{ID}$ represents an ID indicated by a higher layer for the first sidelink data of a first terminal apparatus during multicast transmission, $R_{PRB,CS}^{PSFCH}$ represents a quantity of resource elements that correspond to the first sidelink data and that are used to send the first sidelink feedback information in a resource block set or in a resource pool, $\Delta 1$ and $\Delta 2$ represents resource element index offsets, the resource element index offsets are related to a resource mapping location of the first sidelink feedback information, $\Delta 1$ and $\Delta 2$ are integers greater than or equal to 0, and L is a positive integer.

**19.** The method according to any one of claims 16 to 18, wherein the method further comprises:
determining, by the second terminal apparatus, the first resource based on the first sidelink feedback information.

**20.** The method according to any one of claims 17 to 19, wherein the first resource element satisfies at least one of the following conditions:

the first resource element belongs to a resource in a channel occupancy time COT of the second terminal apparatus;
a resource block set corresponding to the first resource element is a resource block set to which the first resource belongs;
a resource block set corresponding to the first resource element is a resource block set corresponding to sidelink data sent by the second terminal apparatus; or
a resource index of the first resource element is a preset index.

**21.** The method according to any one of claims 16 to 20, wherein the second resource further comprises at least one interlaced resource block in frequency domain.

**22.** A communication apparatus, comprising a processing unit and a communication unit, wherein

the processing unit is configured to access a first channel;
the communication unit is configured to receive first sidelink data on a first resource; and
the communication unit is further configured to send first sidelink feedback information on a second resource, wherein the first sidelink feedback information indicates a receiving status of the first sidelink data, the second resource is a resource corresponding to the first resource, and the first resource and the second resource belong to the first channel.

**23.** The communication apparatus according to claim 22, wherein the processing unit is further configured to obtain configuration information of a resource pool, wherein the resource pool comprises at least two channels, the at least two channels comprise the first channel, the configuration information of the resource pool indicates that a quantity of resource elements that are used to send sidelink feedback information on each of the at least two channels is M, and M is an integer greater than 1.

**24.** The communication apparatus according to claim 23, wherein the processing unit is further configured to:
determine the second resource based on the configuration information of the resource pool.

**25.** The communication apparatus according to claim 23 or 24, wherein the resource elements that are used to send sidelink feedback information on each of the at least two channels have a same location.

**26.** The communication apparatus according to any one of claims 23 to 25, wherein the configuration information is a bitmap; and
the bitmap has a same quantity of bits with a value of 1 on each of the at least two channels.

**27.** A communication apparatus, comprising:

a communication unit, configured to receive first sidelink data on a first resource; and
send first sidelink feedback information on a first resource element, wherein the first sidelink feedback information indicates a receiving status of the first sidelink data, the first resource element belongs to a second resource, the second resource is a resource corresponding to the first resource, and the second resource comprises at least two resource elements.

**28.** The communication apparatus according to claim 27, wherein the at least two resource elements are located at different time domain locations and/or different frequency domain locations.

**29.** The communication apparatus according to claim 27 or 28, wherein an index of the second resource satisfies:

$$\left(P_{ID}+M_{ID}+\Delta 1\right)\bmod\left(floor\left(\frac{R_{PRB,CS}^{PSFCH}}{L}\right)\right)+\Delta 2,$$

wherein

$P_{ID}$ represents a physical layer source address identifier ID carried in control information, $M_{ID}$ represents an ID indicated by a higher layer for the first sidelink data of a first terminal apparatus during multicast transmission, $R_{PRB,CS}^{PSFCH}$ represents a quantity of resource elements that correspond to the first sidelink data and that are used to send the first sidelink feedback information in a resource block set or in a resource pool, $\Delta 1$ and $\Delta 2$ represents resource element index offsets, the resource element index offsets are related to a resource mapping location of the first sidelink feedback information, $\Delta 1$ and $\Delta 2$ are integers greater than or equal to 0, and L is a positive integer.

30. The communication apparatus according to any one of claims 27 to 29, wherein the communication apparatus further comprises:
a processing unit, configured to determine the first sidelink feedback information based on the first resource.

31. The communication apparatus according to any one of claims 27 to 30, wherein the first resource element satisfies at least one of the following conditions:

the first resource element belongs to a resource in a channel occupancy time COT of the first terminal apparatus;
a resource block set corresponding to the first resource element is a resource block set to which the first resource belongs;
a resource block set corresponding to the first resource element is a resource block set corresponding to sidelink data sent by the first terminal apparatus; or
a resource index of the first resource element is a preset index.

32. The communication apparatus according to any one of claims 27 to 31, wherein the second resource further comprises at least one interlaced resource block in frequency domain.

33. A communication apparatus, comprising:

a communication unit, configured to send first sidelink data on a first resource; and
receiving first sidelink feedback information on a second resource, wherein the first sidelink feedback information indicates a receiving status of the first sidelink data, the second resource is a resource corresponding to the first resource, and the first resource and the second resource belong to a first channel.

34. The communication apparatus according to claim 33, wherein the communication apparatus further comprises:
a processing unit, configured to obtain configuration information of a resource pool, wherein the resource pool comprises at least two channels, the at least two channels comprise the first channel, the configuration information of the resource pool indicates that a quantity of resource elements that are used to send sidelink feedback information on each of the at least two channels is M, and M is an integer greater than 1.

35. The communication apparatus according to claim 34, wherein the resource elements that are used to send sidelink feedback information on each of the at least two channels have a same location.

36. The communication apparatus according to claim 34 or 35, wherein the configuration information is a bitmap, and the bitmap has a same quantity of bits with a value of 1 on each of the at least two channels.

37. A communication apparatus, comprising:

a communication unit, configured to send first sidelink data on a first resource; and
receiving first sidelink feedback information on a first resource element, wherein the first sidelink feedback information indicates a receiving status of the first sidelink data, the first resource element belongs to a second resource, the second resource is a resource corresponding to the first resource, and the second resource comprises at least two resource elements.

38. The communication apparatus according to claim 37, wherein the at least two resource elements are located at different time domain locations and/or different frequency domain locations.

39. The communication apparatus according to claim 37 or 38, wherein an index of the second resource satisfies:

$$\left(P_{ID} + M_{ID} + \Delta 1\right) \bmod \left(floor\left(\frac{R_{PRB,CS}^{PSFCH}}{L}\right)\right) + \Delta 2 \,,$$

wherein

$P_{ID}$ represents a physical layer source address identifier ID carried in control information, $M_{ID}$ represents an ID indicated by a higher layer for the first sidelink data of a first terminal apparatus during multicast transmission, $R_{PRB,CS}^{PSFCH}$ represents a quantity of resource elements that correspond to the first sidelink data and that are used to send the first sidelink feedback information in a resource block set or in a resource pool, $\Delta 1$ and $\Delta 2$ represents resource element index offsets, the resource element index offsets are related to a resource mapping location of the first sidelink feedback information, $\Delta 1$ and $\Delta 2$ are integers greater than or equal to 0, and L is a positive integer.

40. The communication apparatus according to any one of claims 37 to 39, wherein the communication apparatus further comprises:
   a processing unit, configured to determine the first resource based on the first sidelink feedback information.

41. The communication apparatus according to any one of claims 38 to 40, wherein the first resource element satisfies at least one of the following conditions:

   the first resource element belongs to a resource in a channel occupancy time COT of a second terminal apparatus;
   a resource block set corresponding to the first resource element is a resource block set to which the first resource belongs;
   a resource block set corresponding to the first resource element is a resource block set corresponding to sidelink data sent by a second terminal apparatus; or
   a resource index of the first resource element is a preset index.

42. The communication apparatus according to any one of claims 37 to 41, wherein the second resource further comprises at least one interlaced resource block in frequency domain.

43. A communication apparatus, comprising:
   a processor, configured to execute a computer program stored in a memory, to enable the apparatus to perform the method according to any one of claims 1 to 5, or to enable the apparatus to perform the method according to any one of claims 6 to 11, or to enable the apparatus to perform the method according to any one of claims 12 to 15, or to enable the apparatus to perform the method according to any one of claims 16 to 21.

44. The apparatus according to claim 43, wherein the apparatus further comprises the memory and/or a communication interface, and the communication interface is coupled to the processor; and
   the communication interface is configured to input and/or output information.

45. A computer-readable storage medium, wherein the computer-readable storage medium stores a computer program; and when the computer program is run on a computer, the computer is enabled to perform the method according to any one of claims 1 to 5, or the computer is enabled to perform the method according to any one of claims 6 to 11, or the computer is enabled to perform the method according to any one of claims 12 to 15, or the computer is enabled to perform the method according to any one of claims 16 to 21.

46. A computer program product, wherein the computer program product comprises instructions used to perform the method according to any one of claims 1 to 5, or the computer program product comprises instructions used to perform the method according to any one of claims 6 to 11, or the computer program product comprises instructions used to perform the method according to any one of claims 12 to 15, or the computer program product comprises instructions used to perform the method according to any one of claims 16 to 21.

FIG. 1

(a)

(b)

(c)

(d)

FIG. 2

FIG. 3

FIG. 4

EP 4 560 963 A1

Bitmap: 11001110

Subframe used for SL

Normal subframe

Starting resource block
sequence number

Spectrum

Subchannel 1 — $n_{CH}$

Subchannel 2 — $n_{CH}$

...

Subchannel N — $n_{CH}$

FIG. 5

0 1 2 3 4 5 6 7 8 9 10 11 12 13

PSFCH

PSSCH

GAP

A PSFCH
period is 1

The PSFCH
period is 2

Resource
pool

The PSFCH
period is 4

One SL transmission slot

FIG. 6

PRB 0 1 2 ... 11 12 13 Bitmap

⬚ PSFCH resource

0  1
1  1
2  1
3  1
4  0
5  0
6  0
7  0
8  0
9  0
10 1
11 1
12 0
13 0
14 0
15 0
16 0
17 0
18 0
19 0
20 0
21 0
22 0
23 1
24 1
25 0
26 0
27 0
28 0
29 0

FIG. 7

EP 4 560 963 A1

FIG. 8

FIG. 9

FIG. 10

FIG. 11

Method 1200

```
┌─────────────────────────────────────────────┐
│     A first terminal apparatus accesses a first channel     │  ⌐⌐  1201
└─────────────────────────────────────────────┘
```

```
┌─────────────────────────────────────────────┐
│  The first terminal apparatus receives first sidelink data on a  │  ⌐⌐  1210
│                    first resource                 │
└─────────────────────────────────────────────┘
```

```
┌─────────────────────────────────────────────┐
│     The first terminal apparatus sends first sidelink feedback     │
│     information on a second resource, where the first sidelink     │
│   feedback information indicates a receiving status of the first   │  ⌐⌐  1220
│      sidelink data, the second resource is a resource       │
│    corresponding to the first resource, and the first resource    │
│      and the second resource belong to the first channel      │
└─────────────────────────────────────────────┘
```

FIG. 12

FIG. 13

EP 4 560 963 A1

Method 1400

A first terminal apparatus receives first sidelink data on a first resource ⎤ 1410

The first terminal apparatus sends first sidelink feedback information on a first resource element, where the first sidelink feedback information indicates a receiving status of the first sidelink data, the first resource element belongs to a second resource, the second resource is a resource corresponding to the first resource, and the second resource includes at least two resource elements ⎤ 1420

FIG. 14

FIG. 15

| PRB | 0 | 1 | 2 | ... | 11 | 12 | 13 | Bitmap |
|-----|---|---|---|-----|----|----|----|--------|
| 0 | | | | | PSFCH | PSFCH | | 1 |
| 1 | | | | | PSFCH | PSFCH | | 1 |
| 2 | | | | | PSFCH | PSFCH | | 1 |
| 3 | | | | | PSFCH | PSFCH | | 1 |
| 4 | | | | | | | | 0 |
| 5 | | | | | | | | 0 |
| 6 | | | | | | | | 0 |
| 7 | | | | | | | | 0 |
| 8 | | | | | | | | 0 |
| 9 | | | | | | | | 0 |
| 10 | | | | | PSFCH | PSFCH | | 1 |
| 11 | | | | | PSFCH | PSFCH | | 1 |
| 12 | | | | | PSFCH | PSFCH | | 1 |
| 13 | | | | | PSFCH | PSFCH | | 1 |
| 14 | | | | | | | | 0 |
| 15 | | | | | | | | 0 |
| 16 | | | | | | | | 0 |
| 17 | | | | | | | | 0 |
| 18 | | | | | | | | 0 |
| 19 | | | | | | | | 0 |
| 20 | | | | | PSFCH | PSFCH | | 1 |
| 21 | | | | | PSFCH | PSFCH | | 1 |
| 22 | | | | | PSFCH | PSFCH | | 1 |
| 23 | | | | | PSFCH | PSFCH | | 1 |
| 24 | | | | | | | | 0 |
| 25 | | | | | | | | 0 |
| 26 | | | | | | | | 0 |
| 27 | | | | | | | | 0 |
| 28 | | | | | | | | 0 |
| 29 | | | | | | | | 0 |

PSFCH resource

FIG. 16

FIG. 17

FIG. 18

FIG. 19

FIG. 20

FIG. 21

EP 4 560 963 A1

FIG. 22

Bitmap indication

PSFCH

| 2 | **5** | 8 | PRB #2 |
| 1 | 4 | 7 | PRB #1 |
| 0 | 3 | **6** | PRB #0 |

0
1
1
0
0
1
1
0
0
0

0
0
0
0
1
1
1
1
0
0

| 1 | 3 | 5 | PRB #1 |
| **0** | 2 | 4 | PRB #0 |

RB set #2

PSSCH 2          PSSCH 3

RB set #1

PSSCH 0          PSSCH 1

Frequency
domain

Code domain

FIG. 23

FIG. 24

EP 4 560 963 A1

FIG. 25

FIG. 26

FIG. 27

2800

Transceiver unit 2810

Processing unit 2820

FIG. 28

2900

Processor 2910

Interface circuit 2930

Memory 2920

FIG. 29

Chip system 3000

Logic circuit 3010

Input/Output interface 3020

FIG. 30

## INTERNATIONAL SEARCH REPORT

| International application No. |
| --- |
| **PCT/CN2023/107867** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC:H04L,H04W,H04Q

Documentation searched other than minimum documentation to the extent that such documents are included in the fields searched

Electronic data base consulted during the international search (name of data base and, where practicable, search terms used)

CNTXT, ENTXTC: 反馈, 资源, 边链路, 旁链路, ACK, NACK, PSFCH, PSSCH, SFCI, HARQ

**C. DOCUMENTS CONSIDERED TO BE RELEVANT**

| Category* | Citation of document, with indication, where appropriate, of the relevant passages | Relevant to claim No. |
| --- | --- | --- |
| X | CN 112152760 A (HUAWEI TECHNOLOGIES CO., LTD.) 29 December 2020 (2020-12-29) description, paragraphs 2, 92-120, 139-140 and 164-192, and figures 2-9 | 1-46 |
| A | US 2022200737 A1 (QUALCOMM INC.) 23 June 2022 (2022-06-23) entire document | 1-46 |
| A | WO 2021030992 A1 (HUAWEI TECHNOLOGIES CO., LTD.) 25 February 2021 (2021-02-25) entire document | 1-46 |
| A | WO 2021066571 A1 (LG ELECTRONICS INC.) 08 April 2021 (2021-04-08) entire document | 1-46 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 September 2023** | **13 September 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/107867**

| Patent document cited in search report | | | Publication date (day/month/year) | Patent family member(s) | | | Publication date (day/month/year) |
|---|---|---|---|---|---|---|---|
| CN | 112152760 | A | 29 December 2020 | WO | 2020259580 | A1 | 30 December 2020 |
| | | | | EP | 3965398 | A1 | 09 March 2022 |
| | | | | US | 2022116934 | A1 | 14 April 2022 |
| US | 2022200737 | A1 | 23 June 2022 | WO | 2022133376 | A1 | 23 June 2022 |
| WO | 2021030992 | A1 | 25 February 2021 | CN | 114128327 | A | 01 March 2022 |
| WO | 2021066571 | A1 | 08 April 2021 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210952282X